# EUROPÄISCHE PATENTSCHRIFT

(11) **EP 3 658 603 B1**
(45) Veröffentlichungstag und Bekanntmachung des Hinweises auf die Patenterteilung: **08.09.2021**
(21) Anmeldenummer: 18745558.9
(22) Anmeldetag: 20.07.2018
(51) Int. Cl.: C08G 18/48, C08G 18/78, C08G 18/79, C08G 18/24, C08G 18/28, C08G 18/32, C08G 18/42

(54) **ZWEIKOMPONENTEN-BESCHICHTUNGSMITTELZUSAMMENSETZUNGEN ZUR BESCHICHTUNG VON FASERVERSTÄRKTEN KUNSTSTOFFMATERIALIEN**
TWO COMPONENT COATING AGENT COMBINATION COMPOSITIONS FOR COATING OF FIBRE-REINFORCED PLASTIC MATERIALS
COMPOSITIONS D'AGENTS DE REVÊTEMENT À DEUX COMPOSANTS PERMETTANT LE REVÊTEMENT DES MATIÈRES PLASTIQUES RENFORCÉES PAR DES FIBRES

(30) Priorität: 25.07.2017 EP 17183052
(43) Veröffentlichungstag der Anmeldung: 03.06.2020
(73) Patentinhaber: BASF Coatings GmbH, 48165 Münster (DE)
(72) Erfinder: WESTHOFF, Elke, 48165 Münster (DE); LI, Henan, 67061 Ludwigshafen (DE); SAEDLER, Markus, 48165 Münster (DE); DOPP, Andreas, 48165 Münster (DE); FEDELER, Lea, 48165 Münster (DE)
(74) Vertreter: BASF IP Association
(86) Internationale Anmeldenummer: PCT/EP2018/069797
(87) Internationale Veröffentlichungsnummer: WO 2019/020524

(56) Entgegenhaltungen:
- WO-A1-2016/016139

## Beschreibung

Die vorliegende Erfindung betrifft Zweikomponenten-Beschichtungsmittelzusammensetzungen zur Beschichtung von faserverstärkten Komposit- und Kunststoffmaterialien, die insbesondere für das Overmolding-Verfahren (Injektions-In-Mold-Beschichtungsverfahren) geeignet sind, ein Verfahren zur Beschichtung derartiger Materialien sowie die Verwendung der Zweikomponenten-Beschichtungsmittelzusammensetzungen zur Herstellung von beschichteten faserverstärkten Komposit- und Kunststoffmaterialien, insbesondere im Mehrschichtbeschichtungsverfahren.

Es besteht ein anhaltender Bedarf an Materialien die eine Gewichtsreduzierung von Fahrzeugkarosserien und deren Teilen erlauben, insbesondere zum Zwecke der Verringerung des Kraftstoffbedarfs und somit des Kohlendioxidausstoßes. Außerdem müssen die Materialien gut formbar sein und somit eine maximale Konstruktionsfreiheit ermöglichen. Geeignete Substrate des Standes der Technik, die bereits eine gewisse Gewichtsreduktion ermögliche sind beispielsweise Aluminium und Hochleistungsstahle. Zunehmend geraten jedoch auch Materialien wie faserverstärkte Kompositmaterialien beziehungsweise faserverstärkte Kunststoffe in den Fokus der Konstrukteure. Solche Materialen spielen insbesondere im Bereich des Kraftfahrzeugdaches, der Motorhaube, den Kraftfahrzeugtüren und der Heckteile eine Rolle. Eine Herausforderung beim Einsatz dieser Materialien ist jedoch, dass diese nicht in der Lackierlinie beschichtet werden können und dennoch eine hervorragende Oberflächenqualität nach einer Beschichtung aufweisen müssen (Class-A-Oberfläche).

Faserverstärkte Kompositmaterialien beziehungsweise faserverstärkte Kunststoffe weisen jedoch zumeist eine unregelmäßige Oberflächenstruktur auf, die zumeist rau ist und auch teilweise offene Fasern aufweist und deren Unregelmäßigkeit sich nach einer Beschichtung durch die Beschichtungsschichten, in der Regel Füllerschichten, Basislackschichten und Klarlackschichten bis zur Lackoberfläche fortpflanzt. Zurückgeführt werden kann die Fortpflanzung der Strukturierung der Substratoberfläche bis zur Oberfläche der obersten Beschichtungsmittelschicht aufgrund verschiedener thermischer Ausdehnungskoeffizienten der Fasern im faserverstärkten Material und der diese umgebende Kunststoffmatrix. Gerade bei Sichtbauteilen im Bereich der Fahrzeugkarosserien stellt dies ein großes Problem dar.

Auf dem Markt befindlich sind bereits Kraftfahrzeuge, welcher eine Karosserie in Ganzschalenbauweise auf Basis eines carbonfaserverstärkten Kompositmaterials aufweisen und die über eine Class-A-Oberfläche verfügen. Die Mehrschichtbeschichtung wird jedoch in einer technisch sehr aufwändigen Beschichtungsarchitektur mit jeweils mehreren Füller-, Basis- und Klarlackschichten, mehreren Zwischenschleifschritten und einem finalen Polierschritt realisiert.

Es besteht somit ein Bestreben ein einfaches Beschichtungsverfahren insbesondere für faserverstärkte Kompositmaterialien beziehungsweise faserverstärkte Kunststoffe bereitzustellen, bei welchem die Vielzahl von Zwischenschichten, vor der finalen Beschichtung mit einer Basislackschicht und einer Klarlackschicht, durch möglichst eine, in hoher Schichtdicke applizierbare Beschichtungsmittelschicht zu ersetzen, die eine Fortpflanzung der unregelmäßigen Substratoberfläche wirksam verhindert, ohne Füller auf dem Substrat hervorragend haftet und sich ohne aufwändige Reinigungs- und/oder Schleifschritte mit handelsüblichen Basislacken und Klarlacken beschichten lässt.

Durch einen konventionellen Sprühauftrag lassen sich derart hohe Schichtdicken von mehr als 100 µm oder gar mehr als 150 µm nicht erzeugen, wenn eine Class-A-Oberflächenqualität gewünscht ist. Andererseits ist es auch nicht erwünscht unnötig dicke Beschichtungsmittelschichten zu erzeugen, da hierdurch die Gewichtsersparnis durch Verwendung faserverstärkter Kunststoffbauteile verloren ginge.

Mögliche Verfahren, mit welchen variable und auch hohe Schichtdicken erzeugt werden können sind das Overmolding-Verfahren (Injektions-In-Mold-Beschichtungsverfahren) oder das konventionelle In-Mold-Beschichtungsverfahren.

Beim konventionellen In-Mold-Beschichtungsverfahren wird eine Werkzeugoberfläche im Spritz- oder Sprühauftrag mit dem Beschichtungsmittel beschichtet und anschließend wird das faserverstärkte Kompositmaterialsubstrat beziehungsweise das faserverstärkte Kunststoffsubstrat auf das nicht oder noch nicht vollständig gehärtete Beschichtungsmittel gepresst.

Beim Overmolding-Verfahren wird die Beschichtungsmittelzusammensetzung in einen Spalt zwischen Substrat und Werkzeugoberfläche injiziert. Ein Ablüften oder Vortrocknen des Beschichtungsmittels ist bei diesem Verfahren nicht möglich, weshalb nur Beschichtungsmittel eingesetzt werden können, die frei oder nahezu frei von flüchtigen Bestandteilen, somit jedoch umweltfreundlich sind. Lösemittel, die mit anderen Bestandteilen des Beschichtungsmittels reagieren können, sogenannte Reaktivverdünner, können jedoch auch im Overmolding-Verfahren eingesetzt werden. Man spricht in einem solchen Fall von lösemittelfreien Beschichtungsmitteln oder Beschichtungsmittelsystemen mit 100 % Festkörper. In der Praxis können derartige Systeme jedoch auch sehr geringe Mengen an flüchtigen organischen Lösemitteln enthalten, die dann in der Regel über in Lösemitteln vorgelöste Additive in die Rezeptur gelangen. Durch die Spaltbreite zwischen Substrat und Werkzeugoberfläche kann beim Overmolding-Verfahren die Schichtdicke der Beschichtungsmittelschicht sehr exakt vorgegeben werden.

Eine besondere Variante des Overmolding-Verfahrens stellt das sogenannte Surface-Resin-Transfer-Molding-Verfahren (auch: Surface-RTM-Verfahren; "Oberflächen-Harz-Transfer-Formgebungs-Verfahren") dar; siehe hierzu Renkl, Schmidhuber & Fries in: Kunststoffe 3/2014, Seiten 86-89*.*

Bei allen Verfahren, bei welchen das Beschichtungsmittel mit einer Werkzeugoberfläche in Kontakt ist, bedarf es jedoch auch einer oberflächenbeschädigungsfreien Entformung der Beschichtung von der Werkzeugoberfläche. Diese kann konventionell erreicht werden, indem die Werkzeugoberfläche vor Gebrauch mit einem Entformungs- beziehungsweise Trennmittel versehen wird. Bei Verwendung eines Entformungs- oder Trennmittels verbleibt dieses nach der Beschichtung des Substrats mit dem Beschichtungsmittel jedoch teilweise an der Werkzeugoberfläche, aber auch an der Beschichtungsmitteloberfläche. Vor einer Nachbeschichtung mit beispielsweise einem Basislack, muss dieses durch ein aufwändiges Reinigungsverfahren entfernt werden. Eine der Aufgaben der vorliegenden Erfindung war es daher, ein Beschichtungsmittel bereitzustellen, welches ohne Einsatz eines solchen externen Trennmittels eine beschädigungsfreie Entformung von der üblicherweise metallischen Werkzeugoberfläche zulässt, trotzdem eine hervorragende Haftung auf dem Substrat gewährleistet und sich ohne aufwändige anschließende Reinigungsschritte und/oder Schleifschritte mit einer weiteren Lackschicht, beispielsweise einem Basislack und Klarlack, unter Ausbildung einer Class-A-Oberfläche nachbeschichten lässt. Des Weiteren sollte eine schnelle Aushärtung des Beschichtungsmittels in hohen Schichtdicken bei relativ niedrigen Härtungstemperaturen möglich sein.

Vorgenannte Aufgaben wurden überraschenderweise durch Bereitstellung einer Zweikomponenten-Beschichtungsmittelzusammensetzung gelöst, welche eine Stammlack-Komponente A und eine Härter-Komponente B umfasst, wobei die
Stammlack-Komponente A
   i. eines oder mehrere Polyole A1 enthält, welche gewählt sind aus der Gruppe der Estergruppen enthaltenden Polyole, und welche eine Hydroxylzahl von 300 bis 500 mg KOH/g besitzen, und eine Hydroxylgruppenfunktionalität größer 2 aufweisen;
   ii. ein oder mehrere ether- und estergruppenfreie aliphatische Polyole A2 der allgemeinen Formel (I)

      R¹-(OH)ₚ (I)

      worin R¹ für einen p-wertigen verzweigten, cyclischen oder linearen, gesättigten oder ungesättigten, aliphatischen Kohlenwasserstoffrest mit 5 bis 18 steht, und wobei der Rest R¹ optional ein oder mehrere tertiäre Aminogruppen enthält, und p = 2 bis 6 ist;
   iii. eine oder mehrere Spezies A3 der allgemeinen Formel (II)

      R²-(C=O)ᵣ-O-(AO)ₛ-R³ (II)

      worin R² ein gesättigter oder ungesättigter, aliphatischer Kohlenwasserstoffrest mit 6 bis 30 Kohlenstoffatomen ist,
      R³ für H, einen Rest PO(OH)₂ oder den gegebenenfalls teilweise phosphatierten Rest eines Mono- oder Disaccharids oder den gegebenenfalls teilweise phosphatierten Rest eines Alditols steht,
      AO für einen oder mehrere Alkylenoxid-Reste gewählt aus der Gruppe bestehend aus Ethylenoxid, Propylenoxid und Butylenoxid steht,
      r = 0 oder 1 ist, und
      s = 0 bis 30 ist,
   iv. einen oder mehrere Vernetzungskatalysatoren A4 gewählt aus der Gruppe der Organozinnverbindungen,
   v. optional eines oder mehrere Polyamine A5 mit mindestens zwei sekundären Aminogruppen und einer Aminzahl von 120 bis 280 mg KOH/g,
   vi. optional eines oder mehrere Polyetherdiole A6;
   vii. optional eines oder mehrere polyethermodifizierte Alkylpolysiloxane A7;
   viii. optional eines oder mehrere Pigmente A8 und/oder einen oder mehrere Füllstoffe A8; und
   ix. optional eines oder mehrere Additive A9 gewählt aus der Gruppe bestehend aus Netz- und/oder Dispergiermitteln, Rheologiehilfsmitteln und Verlaufmitteln;
   und wobei die
Härter-Komponente B
   i. eines oder mehrere Polyisocyanate B1 enthält, welche im Mittel 2,4 bis 5 NCO-Gruppen aufweisen; und
   die Zweikomponenten-Beschichtungsmittelzusammensetzung einen Festkörper von mindestens 96 Gew.-%, vorzugsweise mindestens 98 Gew.-% und besonders bevorzugt mindestens 99 Gew.-% bezogen auf das Gesamtgewicht der Zweikomponenten-Beschichtungsmittelzusammensetzung gemäß ASTM D2369 (2015) besitzt, und
   wobei das molare Verhältnis der NCO-Gruppen der Härter-Komponente B zu den aciden Wasserstoffatomen der Hydroxylgruppen, primären Aminogruppen und sekundären Aminogruppen der Stammlack-Komponente A von 1:1,15 bis 1:0,95, vorzugsweise 1:1,1 bis 1:0,96 und besonders bevorzugt 1:1,05 bis 1:0,98 beträgt.

Der Begriff "Zweikomponenten-Beschichtungsmittelzusammensetzung" bezeichnet Beschichtungsstoffe, bei denen die Reaktion, die zur Härtung führt, durch Mischen von zwei Komponenten (Stammlack und Härter), in einem vorgegebenen Verhältnis, eingeleitet wird. Die einzelnen Komponenten sind keine Beschichtungsstoffe, da sie entweder nicht zur Filmbildung befähigt sind oder keine beständigen Filme ergeben (Römpp Lacke und Druckfarben; Stichwort Zweikomponenten-Lack).

Der Begriff "aliphatischer Rest" steht hierin für einen Rest, der keine aromatischen Strukturen enthält.

Der Begriff "Kohlenwasserstoffrest" steht hierin für Reste, die ausschließlich Kohlenstoffatome und Wasserstoffatome enthalten, es sei denn es wird angegeben, dass dieser Rest zusätzlich bestimmte andere Gruppen oder Atome enthalten darf.

Der Begriff "acides Wasserstoffatom" in Bezug auf Hydroxylgruppen sowie primäre und sekundäre Aminogruppen bezeichnet das am Sauerstoffatom einer Hydroxylgruppe gebundene Wasserstoffatom beziehungsweise die beiden am Stickstoffatom einer primären Aminogruppe gebundenen Wasserstoffatome sowie das am Stickstoffatom einer sekundären Aminogruppe gebundene Wasserstoffatom.

Der Gehalt des Festkörpers wurde gemäß ASTM D2369 (aus dem Jahr 2015) bei 110 °C für 60 min an einer Probe von etwa 2 Gramm der Zweikomponenten-Beschichtungsmittelzusammensetzung bestimmt.

### Zweikomponenten-Beschichtungsmittelzusammensetzung

Die im Folgenden näher beschriebenen Bestandteile der Stammlack-Komponente A und Härter-Komponente B, insbesondere auch die gegebenenfalls unterschiedlich stark bevorzugten Bestandteile, lassen sich generell unabhängig voneinander wählen, so dass beispielsweise die Auswahl eines ganz besonders bevorzugten Bestandteils nicht bedingt, dass dieser nur mit anderen bevorzugten, besonders bevorzugten oder ganz besonders bevorzugten Bestandteilen kombinierbar ist. Dem steht nicht entgegen, dass es in einigen Fällen besonders sinnvoll und bevorzugt sein kann, bei der Verwendung eines bestimmten bevorzugten Bestandteils auch einen anderen bevorzugten Bestandteil zu wählen. So werden beispielsweise die optionalen Pigmente A8 üblicherweise in Kombination mit Netz- und Dispergiermtteln A9 eingesetzt und vorzugsweise auch mit Polyaminen A5 kombiniert, besonders bevorzugt mit den bevorzugten Polyaminen A5. Werden daher im Folgenden bevorzugte Kombinationen beschrieben, so sind diese nicht als zwingende Kombinationen zu verstehen, sondern lediglich als besonders bevorzugte Ausführungsform.

### Bestandteile der Stammlack-Komponente A

### Polyole A1

Die Polyole A1 sind gewählt ist aus der Gruppe der Estergruppen enthaltenden Polyole. Vorzugsweise sind die Polyole A1 aliphatische Polyole.

Vorzugsweise handelt es ich bei den Polyolen A1 um Polyesterpolyole oder Polyester-Polyether-Polyole, oder Mischungen der vorgenannten Polyole. Vorzugsweise besitzen die Polyole A1 oder besitzt die Polyolmischung A1 eine Hydroxylzahl von 340 bis 460 mg KOH/g, vorzugsweise 360 bis 440 mg KOH/g, besonders bevorzugt 380 bis 420 mg KOH/g. Die Hydroxylzahl lässt sich im Rahmen der vorliegenden Erfindung gemäß EN ISO 4629-2:2016 bestimmen.

Vorzugsweise weisen die Polyole A1 eine Hydroxylgruppenfunktionalität von 3 bis 5, besonders bevorzugt eine Hydroxylgruppenfunktionalität von 3 bis 4 auf.

Besonders bevorzugt sind die Polyole A1 verzweigt.

Ganz besonders bevorzugt handelt es sich bei den Polyolen A1 um verzweigte, Estergruppen enthaltende Polyole mit einer Hydroxylzahl von 300 bis 500 mg KOH/g, besser noch einer Hydroxylzahl von 340 bis 460 mg KOH/g und einer Hydroxylgruppenfunktionalität von 3 bis 4.

### Ether- und estergruppenfreie aliphatische Polyole A2

Die erfindungsgemäßen Beschichtungsmittelzusammensetzungen enthalten eines oder mehrere ether- und estergruppenfreie aliphatische Polyole A2 der allgemeinen Formel (I)

R¹-(OH)ₚ (I)

worin R¹ für einen p-wertigen verzweigten, cyclischen oder linearen, vorzugsweise verzweigten, gesättigten oder ungesättigten, vorzugsweise gesättigten, aliphatischen Kohlenwasserstoffrest mit 5 bis 18, vorzugsweise 6 bis 16, besonders bevorzugt 7 bis 12, insbesondere 8 bis 11, wie 8, 9 oder 10 Kohlenstoffatomen steht, wobei der Rest R¹ optional ein oder mehrere, vorzugsweise eine bis drei, besonders bevorzugt zwei tertiäre Aminogruppen enthält, und
p = 2 bis 6, vorzugsweise 2 bis 5, besonders bevorzugt 2 bis 4 ist.

Vorzugsweise liegen zwischen zwei nächstbenachbarten Hydroxylgruppen maximal 2 bis 6, besonders bevorzugt 3 bis 5 Kohlenstoff- und/oder Stickstoffatome.

Vorzugsweise besitzt der Bestandteil A2, also das ether- und estergruppenfreie aliphatische Polyol A2 oder die Mischung der ether- und estergruppenfreien aliphatischen Polyole A2, eine Hydroxylzahl im Bereich von 500 bis 1000 mg KOH/g, besonders bevorzugt von 600 bis 900 mg KOH/g und ganz besonders bevorzugt von 650 bis 850 mg KOH/g, insbesondere 700 bis 800 mg KOH/g.

Besonders bevorzugt stehen die Reste R¹ für einen oder mehrere Reste gewählt aus der Gruppe bestehend aus CH₂C(C₂H₅)(C₄H₈)CH₂, CH₂C(CH₃)₂CHCH(CH₃)₂ und (H₃CCHCH₂)₂NCH₂CH₂N(CH₂CHCH₃)₂.

Ganz besonders bevorzugte ethergruppenfreie aliphatische Polyole A2 sind beispielsweise 2-Butyl-2-ethyl-propandiol und 2,2,4-Trimethyl-1,3-pentanediol, worin die beiden Hydroxylgruppen durch 3 Kohlenstoffatome (C¹-C²-C³) getrennt sind oder N,N,N',N'-Tetrakis(2-hydroxypropyl)ethylendiamin, worin zwischen zwei nächstbenachbarten Hydroxylgruppen die Summe der Kohlenstoff- bzw. Stickstoffatome 5 beträgt (C¹-C²-N³-C⁴-C⁵).

Bezogen auf die Summe der Bestandteile A1 und A2 beträgt die Hydroxylzahl vorzugsweise 400 bis 650 mg KOH/g, besonders bevorzugt 450 bis 600 mg KOH/g und ganz besonders bevorzugt 480 bis 580 mg KOH/g.

### Spezies A3

Die Spezies A3 besitzt eine Struktur, die sich durch folgende Formel (II) wiedergeben lässt:

R²-(C=O)ᵣ-O-(AO)ₛ-R³ (II)

worin R² ein gesättigter oder ungesättigter, aliphatischer Kohlenwasserstoffrest mit 6 bis 30, vorzugsweise 8 bis 26, besonders bevorzugt 10 bis 24 und ganz besonders bevorzugt 12 bis 24 Kohlenstoffatomen ist,
R³ für H, einen Rest PO(OH)₂ oder den gegebenenfalls teilweise phosphatierten Rest eines Mono- oder Disaccharids oder den gegebenenfalls teilweise phosphatierten Rest eines Alditols, insbesondere des Sorbitols steht,
AO für einen oder mehrere Alkylenoxid-Reste gewählt aus der Gruppe bestehend aus Ethylenoxid, Propylenoxid und Butylenoxid steht,
r = 0 oder 1 ist, und
s = 0 bis 30, vorzugsweise 1 bis 25 oder 2 bis 25, besonders bevorzugt 4 bis 22 oder 6 bis 20 und ganz besonders bevorzugt 8 bis 18 ist.

Bei den Resten R² handelt es sich vorzugsweise um acyclische Reste.

Die Reste AO können gleich oder verschieden sein und innerhalb der s Reste statistisch, blockartig oder gradientenartig angeordnet sein. Sind mehrere verschiedene Arten AO enthalten, so ist es bevorzugt, wenn der Anteil an Ethylenoxid mehr als 50 mol%, besonders bevorzugt mindestens 70 mol-% und ganz besonders bevorzugt mindestens 90 mol-%, bezogen auf die Gesamtzahl der Reste AO, beträgt. Vorzugsweise sind den vorgenannten Fällen die von Ethylenoxid verschiedenen Reste Propylenoxid-Reste.

Ist r = 0 und s > 0, so handelt es sich bei den Spezies der Formel (II) um alkoxylierte Fettalkohole, vorzugsweise ethoxylierte Fettalkohole, die gegebenenfalls phosphatiert (R³ = PO(OH)₂) oder mit einem Mono- oder Disaccharid oder dem Rest eines Alditols verethert sind.

Ist r = 1 und s > 0, so handelt es sich bei den Spezies der Formel (II) um alkoxylierte Fettsäuren, vorzugsweise ethoxylierte Fettsäuren, die gegebenenfalls phosphatiert (R³ = PO(OH)₂) oder mit einem Mono- oder Disaccharid oder dem Rest eines Alditols verethert sind.

Ist s = 0 und steht R³ für den Rest eines Mono- oder Disaccharids oder den Rest eines Alditols, so handelt es sich bei den Spezies der Formel (II) um Fettalkoholether eines Mono- oder Disaccharids oder eines Alditols (r = 0) oder um Fettsäureester eines Mono- oder Disaccharids oder eines Alditols (r = 1).

Besonders bevorzugt gilt, dass für einen Teil oder alle Spezies der Formel (II) s = 2 bis 25, besser noch 6 bis 20 und am besten 8 bis 18 ist und/oder für einen Teil oder alle Spezies der Formel (II) s = 0 ist und R³ für einen gegebenenfalls teilweise phosphatierten Rest eines Mono- oder Disaccharids oder einen gegebenenfalls teilweise phosphatierten Rest eines Alditols steht.

Insbesondere können auch Mischungen der Spezies A3 eingesetzt werden, in welchen für mindestens eine Spezies s = 0 gilt und für mindestens eine weitere Spezies s > 0, vorzugsweise 1 bis 25 oder 2 bis 25, besonders bevorzugt 4 bis 22 oder 6 bis 20 und ganz besonders bevorzugt 8 bis 18 gilt.

Ganz besonders bevorzugt handelt es sich um Mischungen, die obengenannte alkoxylierte Fettalkohole mit s > 0 und/oder obengenannte alkoxylierte Fettsäuren mit s > 0 enthalten und wenigstens eine weitere Spezies gewählt aus der Gruppe umfassend
gegebenenfalls phosphatierte oder veretherte Fettalkohole mit r = s = 0 und R³ = H, PO(OH)₂, ein Monosaccharid-Rest, Disaccarid-Rest oder Alditol-Rest und
gegebenenfalls phosphatierte oder veresterte Fettsäuren mit r = 1, s = 0 und R³ = H, PO(OH)₂, Monosaccharid-Rest, Disaccarid-Rest oder Alditol-Rest.

### Vernetzungskatalysatoren A4

Der Vernetzungskatalysator dient in erster Linie der Katalyse der Reaktion zwischen den freien Isocyanatgruppen der Polyisocyanate B1 und den hydroxylgruppenhaltigen und/oder primäre Aminogruppen und/oder sekundäre Aminogruppen enthaltenden Bestandteilen der Stammlack-Komponente A.

Der oder die Vernetzungskatalysatoren A4 werden gewählt aus der Gruppe der Organozinnverbindungen, vorzugsweise aus der Gruppe der Dialkylzinndicarboxylate und Dialkylzinndimercaptide.

Die Dialkylzinndicarboxylate besitzen vorzugsweise die allgemeine Formel (III)

[(CₘH₂ₘ₊₁)]₂Sn[OOC(CₙH₂ₙ₊₁)]₂ (III)

mit m = 1 bis 10, vorzugsweise m = 4 bis 8, und n = 5 bis 15, vorzugsweise n = 7 bis 13 und besonders bevorzugt n = 9 bis 11. Unter den Dialkylzinndicarboxylaten haben sich besonders Dibutylzinndilaurat und ganz besonders Dioctylzinndilaurat bewährt.

Die Dialkylzinndimercaptide besitzen vorzugsweise die allgemeine Formel (IV)

[(CₘH₂ₘ₊₁]₂Sn[S(CₙH₂ₙ₊₁)]₂ (IV)

mit m = 1 bis 10, vorzugsweise m = 4 bis 8, und n = 6 bis 16, vorzugsweise n = 8 bis 14 und besonders bevorzugt n = 10 bis 12. Unter den Dialkylzinndimercaptiden hat sich besonders Dimethylzinndilaurylmercaptid bewährt.

Ganz besonders bevorzugt sind die Spezies Dioctylzinndilaurat und Dimethylzinndilaurylmercaptid. Als äußerst vorteilhaft hat sich der Einsatz von Dioctylzinndilaurat erwiesen, da dieses in der vorgesehenen Anwendung nicht nur als Katalysator wirkt, sondern überraschenderweise auch die Entformung des beschichteten Substrats aus dem Werkzeug verbessert.

### Polyamine A5

Die Polyamine A5 besitzen eine Aminzahl von 120 bis 280 mg KOH/g, vorzugsweise eine Aminzahl von 150 bis 250 mg KOH/g und besonders bevorzugt eine Aminzahl von 170 bis 220 mg KOH/g.

Des Weiteren besitzen die Polyamine A5 mindestens zwei sekundäre Aminogruppen, vorzugsweise genau zwei sekundäre Aminogruppen. Vorzugsweise enthält das Polyamin A5 keine Hydroxylgruppen und besonders bevorzugt keine weiteren Aminogruppen außer den sekundären Aminogruppen. Ganz besonders bevorzugt enthält A5, außer den sekundären Aminogruppen, keine gegenüber NCO-Gruppen reaktiven Gruppen, insbesondere keine Hydroxylgruppen, keine primären Aminogruppen und keine Carboxylgruppen.

Vorzugsweise enthält A5 Estergruppen, besonders bevorzugt doppelt so viele Estergruppen wie sekundäre Aminogruppen.

Ganz besonders bevorzugte Polyamine A5 lassen sich durch die allgemeine Formel (V) wiedergeben: 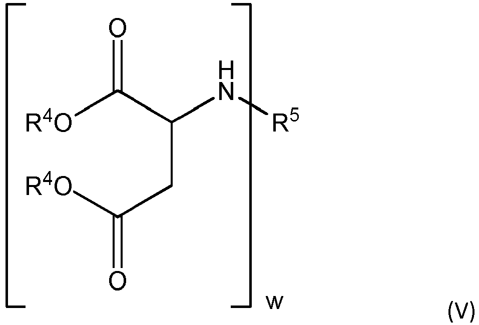 worin
die Reste R⁴ unabhängig voneinander für verzweigte oder unverzweigte Alkylreste mit 1 bis 6, vorzugsweise 1 bis 4 Kohlenstoffatomen, ganz besonders bevorzugt für Methyl, Ethyl, Propyl oder Butyl stehen,
der Rest R⁵ für einen w-wertigen aliphatischen und/oder cycloaliphatischen Kohlenwasserstoffrest mit 6 bis 24, vorzugsweise 8 bis 20, besonders bevorzugt 10 bis 18 und ganz besonders bevorzugt 12 bis 16 Kohlenstoffatomen steht, wie beispielsweise einen Kohlenwasserstoffrest mit 13, 14 oder 15 Kohlenstoffatomen, und
w für 2 bis 4, vorzugsweise 2 oder 3, besonders bevorzugt 2 steht.

Ganz besonders bevorzugt handelt es sich bei dem Polyaminen A5 um Michael-Addukte aus 1 mol eines Diamins mit zwei primären Aminogruppen und 2 mol eines Maleinsäuredialkylesters. Bei einer solchen Michaeladdition wird je eine primäre Aminogruppe an eine Kohlenstoff-Kohlenstoff-Doppelbindung des Maleinsäurediester addiert.

Diese letztgenannten, ganz besonders bevorzugten Polyamine A5 sind Diamine A5 und lassen sich durch folgende Strukturformel (Va) wiedergeben: 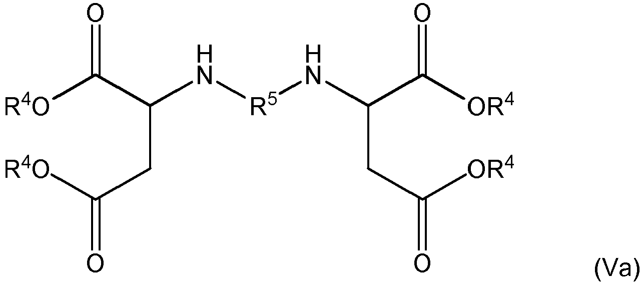 worin
die Reste R⁴ unabhängig voneinander für verzweigte oder unverzweigte Alkylreste mit 1 bis 6, vorzugsweise 1 bis 4 Kohlenstoffatomen, ganz besonders bevorzugt für Methyl, Ethyl, Propyl oder Butyl, vorzugsweise einen Ethylrest stehen, der Rest R⁵ für einen zweiwertigen aliphatischen und/oder cycloaliphatischen Kohlenwasserstoffrest mit 6 bis 24, vorzugsweise 8 bis 20, besonders bevorzugt 10 bis 18 und ganz besonders bevorzugt 12 bis 16 Kohlenstoffatomen, wie beispielsweise 13, 14 oder 15 Kohlenstoffatomen steht.

Ganz besonders bevorzugt enthält der zweiwertige Rest R⁵ der obigen Formel cycloaliphatische Strukturen und 13 bis 15 Kohlenstoffatome. Beispiele für besonders geeignete Reste R⁵ sind die zweiwertigen Reste der folgenden Formel (VI): 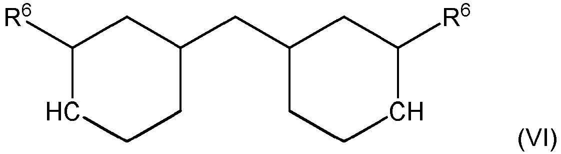 worin die Reste R⁶ unabhängig voneinander für Wasserstoff oder einen Alkylrest mit 1 bis 4 Kohlenstoffatomen, insbesondere einen Methyl, Ethyl, Propyl oder Butylrest, vorzugsweise einen Methylrest stehen.

Der Einsatz der Polyamine A5 in den erfindungsmäßen Beschichtungsmittelzusammensetzungen hat sich als sehr vorteilhaft herausgestellt, wenn es sich bei den erfindungsgemäßen Beschichtungsmitteln um pigmentierte und/oder füllstoffhaltige Beschichtungsmittel handelt. Die Polyamine A5 werden bei der Herstellung der pigmentierten Stammlack-Komponente A vorzugsweise so eingesetzt, dass unter deren Verwendung zunächst eine Mahlpaste aus dem oder den Pigmenten A8 und/oder Füllstoffen A8 unter weiterer Verwendung der Additive A9 hergestellt wird und diese Mahlpaste homogen mit den anderen Stammlack-Bestandteilen vermischt wird.

### Polvetherdiol A6

Vorzugsweise enthalten die erfindungsgemäßen Beschichtungsmittelzusammensetzungen Polyetherdiole A6 der allgemeinen Formel (VII)

HO-(AO)ₜ-H (VII)

worin die Reste AO unabhängig voneinander für Alkylenoxid-Reste gewählt aus der Gruppe bestehend aus Ethylenoxid, Propylenoxid und Butylenoxid stehen und t für 5 bis 30, vorzugsweise 8 bis 25, besonders bevorzugt 10 bis 20 und ganz besonders bevorzugt 12 bis 18 steht.

Die Reste AO können gleich oder verschieden sein und innerhalb der t Reste statistisch, blockartig oder gradientenartig angeordnet sein. Sind mehrere verschiedene Arten AO enthalten, so ist es bevorzugt, wenn der Anteil an Propylenoxid-Resten mehr als 50 mol-%, besonders bevorzugt mindestens 70 mol-% und ganz besonders bevorzugt mindestens 90 mol-%, wie insbesondere 100 mol-% beträgt.

Ganz besonders bevorzugt handelt es sich bei den Polyetherdiolen A6 um Polypropylenoxide (AO = Propylenoxid), insbesondere um Polypropylenoxide worin t für 8 bis 25, vorzugsweise 10 bis 20 und besonders bevorzugt 12 bis 18 steht.

Die Polyetherdiole A6 fungieren in der Beschichtungsmittelzusammensetzung als sogenannter Reaktivverdünner. Langkettige Polyetherdiole A6, vorzugsweise solche mit t ≥ 10 haben hierbei einen zusätzlich flexibilisierenden Einfluss auf die gehärtete Beschichtung.

### Polyethermodifizierte Alkylpolysiloxane A7

Die erfindungsgemäßen Beschichtungsmittelzusammensetzungen enthalten nicht zwingend, jedoch vorzugsweise geringe Mengen an polyethermodifizierten Alkylpolysiloxanen A7, vorzugsweise an polyethermodifizierten Methylpolysiloxanen. Durch Zusatz von vorzugsweise 0,5 bis 5 Gew.-%, besonders bevorzugt 1 bis 4 Gew.-% und ganz besonders bevorzugt 1 bis 3 Gew.-% an polyethermodifizierten Alkylpolysiloxanen, insbesondere der vorgenannten Mengen an polyethermodifizierten Methylpolysiloxanen, bezogen auf das Gesamtgewicht der Stammlack-Komponente A, kommt es zu einer verbesserten Wirkung der Spezies A3 auf die Entformungswirkung, des gehärteten beschichteten faserverstärkten Bauteils aus dem Formwerkzeug.

### Pigmente A8 und/oder Füllstoffe A8

Die erfindungsgemäßen Beschichtungsmittelzusammensetzungen können pigmentiert und/oder mit Füllstoffen gefüllt vorliegen. Als Pigmente und Füllstoffe können prinzipiell alle anorganischen und organischen Pigmente und Füllstoffe eingesetzt werden.

Für die vorliegende Erfindung ist eine scharfe Unterscheidung zwischen Pigmenten und Füllstoffen nicht notwendig. In der Praxis wird zur Unterscheidung häufig der Brechungsindex herangezogen. Liegt dieser oberhalb von 1,7 so spricht man in der Regel von Pigmenten, liegt er unterhalb dieses Werts von Füllstoffen.

Typische anorganische Pigmente sind Oxid- und Oxidhydroxid-Pigmente, wie beispielsweise Titandioxid, Zinkoxid, Eisenoxid und Chromoxid, Oxid-Mischphasenpigmente, wie beispielsweise Bismut-Molybdän-Vanadium-Oxidgelb, Chromtitangelb, Spinellblau, Eisen-Manganbraun, Zink-Eisenbraun, Eisen-Manganschwarz und Spinellschwarz, Sulfid- und Sulfidselenidpigmente, wie beispielsweise Zinksulfid, Lithopone, Cadmiumgelb und Cadmiumrot, Chromat- und Chromat-Molybdän-Mischphasenpigmente, wie beispielsweise Chromgelb und Molybdatorange und -rot, Komplexsalzpigmente, wie beispielsweise Eisenblau, Silikatpimente, wie beispielsweise Aluminiumsilikat und Ultramarin (blau, violett und rot), Pigmente aus chemischen Elementen, wie beispielsweise Aluminium, Kupfer-Zink-Legierungen und insbesondere Pigmentruß, sowie andere Pigmente, wie beispielweise Bariumsulfat.

Typische organische Pigmente sind Monoazopigmente, Disazopigmente und polycyclische Pigmente wie beispielsweise Perylenpigmente und Phthalocyaninpigmente.

Typische anorganische Füllstoffe sind Silicate, wie beispielsweise Talk und Kaolin, Kieselsäuren, wie beispielsweise gefällte oder pyrogene Kieselsäuren, Oxide, wie beispielsweise Aluminiumhydroxid oder Magnesiumhydroxid, Sulfate, wie beispielsweise Blanc fixe und Calciumsulfat, sowie verschiedene Carbonate.

### Additive A9

Die erfindungsgemäßen Beschichtungsmittelzusammensetzungen können von den Bestandteilen A1 bis A8 verschiedene Additive aus der Gruppe der Netz- und/oder Dispergiermittel, Rheologiehilfsmittel und Verlaufmittel enthalten. Netz- und Dispergiermittel werden insbesondere dann eingesetzt wenn die erfindungsgemäße Beschichtungsmittelzusammensetzung eines oder mehrere Pigmente A8 und/oder Füllstoffe A8 enthält.

### Bestandteile der Härter-Komponente B

### Polvisocvanate B1

Die Härter-Komponente B umfasst Polyisocyanate B1, die eine NCO-Gruppenfunktionalität von größer 2,4 bis 5, vorzugsweise 2,6 bis 4, besonders bevorzugt 2,8 bis 3,6 besitzen.

Bei den Polyisocyanaten B1 handelt es sich vorzugsweise um Oligomere, vorzugsweise Trimere oder Tetramere von Diisocyanaten. Besonders bevorzugt handelt es sich um Iminooxadiazindione, Isocyanurate, Allophanate und/oder Biurete von Diisocyanaten, ganz besonders bevorzugt um Iminooxadiazindione und/oder Allophanatgruppen enthaltende Trimere.

Besonders bevorzugt handelt es sich bei den Polyisocyanaten B1 der Härter-Komponente B um aliphatische und/oder cycloaliphatische, ganz besonders bevorzugt aliphatische Polyisocyanate.

Besonders bevorzugt dienen Hexamethylendiisocyanat und/oder Isophorondiisocyanat, ganz besonders bevorzugt nur Hexamethylendiisocyanat als Diisocyanat-Basis der oben genannten Oligomere, insbesondere der oben genannten Tri- oder Tetramere.

Ganz besonders bevorzugt umfasst die Härter-Komponente B aliphatische Polyisocyanate B1 auf der Basis von Trimeren und/oder Tetrameren aliphatischer Diisocyanate, vorzugsweise Trimeren aliphatischer Diisocyanate gewählt aus der Gruppe bestehend aus Hexamethylendiisocyanat und Isophorondiisocyanat, vorzugsweise nur Hexamethylendiisocyanat, wobei die Polyisocyanate mindestens eine Iminooxadiazindion-, Isocyanaurat- und/oder Allophanat-Struktur enthalten.

Durch die Auswahl des Polyisocyanats B1 oder einer Kombination von Polyisocyanaten B1 lässt sich die Härte der resultierenden gehärteten Beschichtung beeinflussen.

Insbesondere die Verwendung Iminooxadiazindion-Strukturen enthaltender Polyisocyanate B1führt zu Beschichtungen mit besonderer Härte, wodurch verhindert wird, dass sich Substratstrukturen bis zur gehärteten Beschichtungsoberfläche fortpflanzen und dort eine unerwünschte Welligkeit auftritt. Derartige Polyisocyanate sind beispielsweise von der Firma Covestro unter der Bezeichnung Desmodur N3900 erhältlich.

Ähnliche Resultate können mit Isocyanurat-Strukturen enthaltenden Polyisocyanaten B1, wie sie beispielsweise unter der Bezeichnung Desmodur N3800 von der Firma Covestro erhältlich sind, erreicht werden, wobei die Beschichtung weiterhin hart, jedoch flexibler ist.

Allophanat-Strukturen enthaltende Polyisocyanate B1, werden nicht ausschließlich jedoch vorzugsweise in pigmentierten erfindungsgemäßen Beschichtungsmittelzusammensetzungen eingesetzt, insbesondere solchen, die auch die Bestandteile A5 enthalten. Allophanat-Strukturen enthaltende Polyisocyanate B1 sind ebenfalls von der Firma Covestro beispielsweise unter der Bezeichnung Desmodur N3500 erhältlich.

### Weitere Beschichtungsmittelbestandteile

### Weitere Additive A10 und/oder B2

Die weiteren von den Stammlack-Bestandteilen A1 bis A9 verschiedenen Additive A10 sind, wenn sie überhaupt eingesetzt werden, in der Regel Bestandteile der Stammlack-Komponente A.

Soweit diese weiteren Additive nicht gegenüber der Härter-Komponente B reaktiv sind, können diese jedoch prinzipiell auch in der Härter-Komponente B als Additive B2 eingesetzt werden.

Beispiele geeigneter Additive A10 beziehungsweise B2 sind UV-Absorber, Lichtschutzmittel, Radikalfänger, thermolabile radikalische Initiatoren, von den Vernetzungskatalysatoren A4 verschiedene Katalysatoren für die Vernetzung, von den Polyolen A10 der anderen Bestandteile verschiedene Polyole wie beispielsweise Mono- oder Disaccharide oder Alditole wie insbesondere Sorbitol, Entlüftungsmittel, Slipadditive, Polymerisationsinhibitoren, Entschäumer, Emulgatoren, Haftvermittler, filmbildende Hilfsmittel oder Flammschutzmittel. Weitere Beispiele geeigneter Lackadditive werden in dem Lehrbuch Lackadditive von Johan Bieleman, Wiley-VCH, Weinheim, New York, 1998, beschrieben.

Unerwünschte Bestandteile der erfindungsgemäßen Beschichtungsmittelzusammensetzungen sind solche, die bei der Festkörperbestimmung (110 °C, 60 min ASTM D2369 (2015)) flüchtig sind. Erfindungsgemäß beträgt der Anteil solcher Bestandteile maximal 4 Gew.-%, vorzugsweise maximal 3, besser noch maximal 2 oder am besten maximal 1 Gew.-% bezogen auf das Gesamtgewicht der erfindungsgemäßen Beschichtungsmittelzusammensetzung. Derartige unerwünschte Bestandteile sind beispielsweise Wasser und in der Beschichtungsmittelzusammensetzung gegenüber freien Isocyanatgruppen nichtreaktive flüchtige organische Lösemittel. Da es jedoch teilweise unvermeidbar ist, dass beispielsweise über eine Restfeuchtigkeit von Pigmenten und Füllstoffen Wasser in die Beschichtungsmittel gelangt oder flüchtige organische Lösemittel über bestimmte Additive, die nur in solchen flüchtigen organischen Lösemitteln vorgelöst angeboten werden, sind derartige unerwünschte Bestandteile in den obigen Grenzen in der Regel tolerierbar. Bevorzugt ist es jedoch derartige Bestandteile durch Trockung oder destillativ vor dem Einsatz der diese enthaltenden Bestandteile zu entfernen oder im Falle der flüchtigen organischen Lösemittel vor dem Einsatz im Stammlack oder Härter durch Reaktivverdünner zu ersetzen.

### Beispiele bevorzugter Ausführungsformen der erfindungsgemäßen Zweikomponenten-Beschichtungsmittelzusammensetzung

Bevorzugt umfasst die Stammlack-Komponente A
i. eines oder mehrere verzweigte, aliphatische Polyole A1, welche gewählt sind aus der Gruppe der Estergruppen enthaltenden Polyole, welche eine Hydroxylzahl von 360 bis 440 mg KOH/g besitzen, und eine Hydroxylgruppenfunktionalität von 3 bis 4 aufweisen;
ii. ein oder mehrere ether- und estergruppenfreie aliphatische Polyole A2 der allgemeinen Formel (I)

   R¹-(OH)ₚ (I)

   worin R¹ für einen p-wertigen verzweigten, gesättigten aliphatischen Kohlenwasserstoffrest mit 5 bis 18 steht, und wobei der Rest R¹ optional zwei tertiäre Aminogruppen enthält und p = 2 bis 4 ist;
iii. eine oder mehrere Spezies A3 der allgemeinen Formel (II)

   R²-(C=O)ᵣ-O-(AO)ₛ-R³ (II)

   worin R² ein gesättigter oder ungesättigter, aliphatischer Kohlenwasserstoffrest mit 6 bis 30 Kohlenstoffatomen ist,
   R³ für H, einen Rest PO(OH)₂ oder den gegebenenfalls teilweise phosphatierten Rest eines Monosaccharids oder den gegebenenfalls teilweise phosphatierten Rest eines Alditols steht, AO für einen oder mehrere Alkylenoxid-Reste gewählt aus der Gruppe bestehend aus Ethylenoxid und Propylenoxid steht,
   r = 0 oder 1 ist und s = 0 bis 30 ist,
iv. einen oder mehrere Vernetzungskatalysatoren A4 gewählt aus der Gruppe der Dialkylzinndicarboxylate und der Dialkylzinndimercaptide steht,
v. eines oder mehrere Polyamine A5 mit zwei sekundären Aminogruppen und einer Aminzahl von 120 bis 280 mg KOH/g, für den Fall, dass auch eines oder mehrere Pigmente A8 und/oder einer oder mehrere Füllstoffe A8 in der Stammlack-Komponente A enthalten sind,
vi. optional eines oder mehrere Polyetherdiole A6, umfassend Propylenoxid-Einheiten und gegebenenfalls Ethylenoxid-Einheiten;
vii. eines oder mehrere polyethermodifizierte Methylpolysiloxane A7;
viii. optional eines oder mehrere Pigmente A8 und/oder einen oder mehrere Füllstoffe A8; und
ix. eines oder mehrere Additive A9 gewählt aus der Gruppe bestehend aus Netz- und/oder Dispergiermitteln, Rheologiehilfsmitteln und Verlaufmitteln, für den Fall, dass auch eines oder mehrere Pigmente A8 und/oder einer oder mehrere Füllstoffe A8 in der Stammlack-Komponente A enthalten sind.

Besonders bevorzugt umfasst die Stammlack-Komponente A
i. eines oder mehrere verzweigte, aliphatische Polyole A1, welche gewählt sind aus der Gruppe der Estergruppen enthaltenden Polyole, welche eine Hydroxylzahl von 340 bis 460 mg KOH/g besitzen, und eine Hydroxylgruppenfunktionalität von 3 bis 4 aufweisen;
ii. ein oder mehrere ether- und estergruppenfreie aliphatische Polyole A2 der allgemeinen Formel (I)

   R¹-(OH)ₚ (I)

   worin R¹ für einen p-wertigen verzweigten, gesättigten aliphatischen Kohlenwasserstoffrest mit 7 bis 12 steht, und wobei der Rest R¹ optional zwei tertiäre Aminogruppen enthält und p = 2 bis 4 ist;
iii. eine oder mehrere Spezies A3 der allgemeinen Formel (II)

   R²-(C=O)ᵣ-O-(AO)ₛ-R³ (II)

   worin R² ein gesättigter oder ungesättigter, aliphatischer Kohlenwasserstoffrest mit 10 bis 24 Kohlenstoffatomen ist,
   R³ für H, einen Rest PO(OH)₂ oder den gegebenenfalls teilweise phosphatierten Rest eines Monosaccharids oder den gegebenenfalls teilweise phosphatierten Rest eines Alditols steht, AO für einen oder mehrere Alkylenoxid-Reste gewählt aus der Gruppe bestehend aus Ethylenoxid und Propylenoxid steht,
   r = 0 oder 1 ist und s = 0 bis 30 ist,
iv. einen oder mehrere Vernetzungskatalysatoren A4 gewählt aus der Gruppe der Dialkylzinndicarboxylate und der Dialkylzinndimercaptide steht,
v. eines oder mehrere Polyamine A5 mit mindestens zwei sekundären Aminogruppen und einer Aminzahl von 150 bis 250 mg KOH/g, für den Fall, dass auch eines oder mehrere Pigmente A8 und/oder einer oder mehrere Füllstoffe A8 in der Stammlack-Komponente A enthalten sind,
vi. optional eines oder mehrere Polyetherdiole A6, umfassend Propylenoxid-Einheiten und gegebenenfalls Ethylenoxid-Einheiten;
vii. eines oder mehrere polyethermodifizierte Methylpolysiloxane A7;
viii. optional eines oder mehrere Pigmente A8 und/oder einen oder mehrere Füllstoffe A8; und
ix. eines oder mehrere Additive A9 gewählt aus der Gruppe bestehend aus Netz- und/oder Dispergiermitteln, Rheologiehilfsmitteln und Verlaufmitteln, für den Fall, dass auch eines oder mehrere Pigmente A8 und/oder einer oder mehrere Füllstoffe A8 in der Stammlack-Komponente A enthalten sind.

Ganz besonders bevorzugt umfasst die Stammlack-Komponente A
i. eines oder mehrere verzweigte, aliphatische Polyole A1, welche gewählt sind aus der Gruppe der Estergruppen enthaltenden Polyole, welche eine Hydroxylzahl von 340 bis 460 mg KOH/g besitzen, und eine Hydroxylgruppenfunktionalität von 3 bis 4 aufweisen;
ii. ein oder mehrere ether- und estergruppenfreie aliphatische Polyole A2 der allgemeinen Formel (I)

   R¹-(OH)ₚ (I)

   worin R¹ für einen p-wertigen verzweigten, gesättigten aliphatischen Kohlenwasserstoffrest mit 7 bis 12 steht, wobei zwischen zwei nächstbenachbarten Hydroxylgruppen maximal 2 bis 6 Kohlenstoffatome liegen, wobei der Rest R¹ optional zwei tertiäre Aminogruppen enthält, p = 2 bis 4 ist und das oder die Polyole A2 eine Hydroxylzahl von 650 bis 850 mg KOH/g besitzen;
iii. mehrere Spezies A3 der allgemeinen Formel (II)

   R²-(C=O)ᵣ-O-(AO)ₛ-R³ (II)

   worin R² ein gesättigter oder ungesättigter, aliphatischer Kohlenwasserstoffrest mit 10 bis 24 Kohlenstoffatomen ist,
   R³ für H, einen Rest PO(OH)₂ oder den gegebenenfalls teilweise phosphatierten Rest eines Monosaccharids oder den gegebenenfalls teilweise phosphatierten Rest eines Alditols steht, AO für einen oder mehrere Alkylenoxid-Reste gewählt aus der Gruppe bestehend aus Ethylenoxid und Propylenoxid steht,
   r = 0 oder 1 ist und für mindestens eine Spezies s = 0 gilt und für mindestens eine weitere Spezies s = 2 bis 25, vorzugsweise 6 bis 20 gilt,
iv. einen Vernetzungskatalysator A4 gewählt aus der Gruppe der Dialkylzinndicarboxylate steht,
v. eines oder mehrere Polyamine A5, für den Fall, dass auch eines oder mehrere Pigmente A8 und/oder einer oder mehrere Füllstoffe A8 in der Stammlack-Komponente A enthalten sind, wobei das oder die Polyamine A5 mindestens zwei sekundären Aminogruppen tragen, eine Aminzahl von 150 bis 250 mg KOH/g und eine Struktur der allgemeinen Formel (V) besitzen 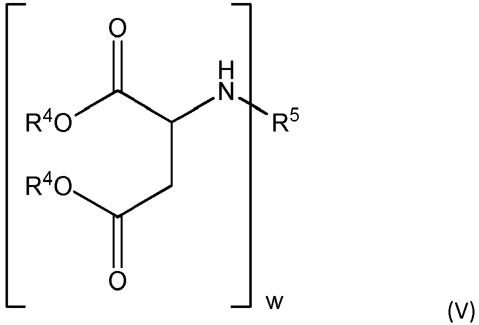 worin
   die Reste R⁴ unabhängig voneinander für verzweigte oder unverzweigte Alkylreste mit 1 bis 6 Kohlenstoffatomen stehen,
   der Rest R⁵ für einen w-wertigen aliphatischen und/oder cycloaliphatischen Kohlenwasserstoffrest mit 6 bis 24 Kohlenstoffatomen steht, und w für 2 bis 4 steht,
vi. optional eines oder mehrere Polyetherdiole A6, umfassend mehr als 50 mol-% Propylenoxid-Reste und gegebenenfalls Ethylenoxid-Reste;
vii. eines oder mehrere polyethermodifizierte Methylpolysiloxane A7;
viii. optional eines oder mehrere Pigmente A8 und/oder einen oder mehrere Füllstoffe A8; und
ix. eines oder mehrere Additive A9 gewählt aus der Gruppe bestehend aus Netz- und/oder Dispergiermitteln, Rheologiehilfsmitteln und Verlaufmitteln, für den Fall, dass auch eines oder mehrere Pigmente A8 und/oder einer oder mehrere Füllstoffe A8 in der Stammlack-Komponente A enthalten sind.

Bevorzugt umfasst die Härter-Komponente B
i. eines oder mehrere aliphatische Polyisocyanate B1, welche im Mittel 2,4 bis 4 NCO-Gruppen aufweisen.

Besonders bevorzugt umfasst die Härter-Komponente B
i. eines oder mehrere aliphatische Polyisocyanate B1, welche im Mittel 2,6 bis 4 NCO-Gruppen aufweisen und wobei es sich um Trimere und/oder Tetramere von Diisocyanaten handelt, und die Trimere und/oder Tetramer gewählt sind aus der Gruppe der Iminooxadiazindione, Isocyanurate, Allophanate und Biurete.

Ganz besonders bevorzugt umfasst die Härter-Komponente B
i. eines oder mehrere aliphatische Polyisocyanate B1, welche im Mittel 2,8 bis 3,6 NCO-Gruppen aufweisen und wobei es sich um Trimere und/oder Tetramere von Diisocyanaten handelt, die Trimere und/oder Tetramer gewählt sind aus der Gruppe der Iminooxadiazindione, Isocyanurate und Allophanate und die Diisocyanate gewählt sind aus der Gruppe bestehend aus Hexamethylendiisocyanat und Isophorondiisocyanat.

### Einsatzmengen der Bestandteile

Die im Folgenden angegebenen prozentualen Anteile der Bestandteile A1 bis A10 in der Stammlack-Komponente A sowie B1 und B2 in der Härter-Komponente haben Gültigkeit für alle oben angegebenen Ausführungsformen der Erfindung. Die prozentualen Anteile gelten somit sowohl für die breiteste Definition des jeweiligen Bestandteils, als auch für die bevorzugteste Variante des betreffenden Bestandteils gleichermaßen. Dies gilt auch unabhängig davon, ob der jeweilige Bestandteil aus einer Spezies oder mehreren Spezies dieses Bestandteils besteht.

Die Gewichtssumme der Bestandteile A1 bis A9 und B1 am Gesamtgewicht der erfindungsgemäßen Zweikomponenten-Beschichtungsmittelzusammensetzung beträgt vorzugsweise mindestens 90 Gew.-%, besonders bevorzugt mindestens 95 Gew.-% und ganz besonders bevorzugt mindestens 97 oder mindestens 98 Gew.-%. Ganz besonders bevorzugt besteht die erfindungsgemäße Zweikomponenten-Beschichtungsmittelzusammensetzung aus den Bestandteilen A1 bis A9 und B1.

Handelt es sich bei der erfindungsgemäßen Zweikomponenten-Beschichtungsmittelzusammensetzung um eine solche, die keine Bestandteile A8 enthält, so beträgt die Gewichtssumme der Bestandteile A1, A2, A3, A4, A6, A7 und B1 vorzugsweise mindestens 90 Gew.-%, besonders bevorzugt mindestens 95 Gew.-% und ganz besonders bevorzugt mindestens 97 oder 98 Gew.-%. Ganz besonders bevorzugt besteht die erfindungsgemäße Zweikomponenten-Beschichtungsmittelzusammensetzung in einem solchen Fall aus den Bestandteilen A1 bis A4, A6, A7 und B1.

Die Mengen der Bestandteile A1, A2 und sofern enthalten A5 können in der Stammlack-Komponente A in weiten Bereichen variieren. Bevorzugt ist es hierbei dass die Gewichtssumme der Bestandteile A1, A2 und A5 bezogen auf das Gesamtgewicht der Stammlack-Komponente A 75 bis 95 Gew.-%, besonders bevorzugt 80 bis 93 Gew.-% und ganz besonders bevorzugt 82 bis 90 Gew.-% beträgt.

Die Menge an Bestandteilen A1 in Bezug auf die Gewichtssumme der Bestandteile A1 und A2 kann ebenfalls in weiten Bereichen variieren. Bevorzugt beträgt der Anteil der Bestandteile A1 bezogen auf die Gewichtssumme der Bestandteile A1 und A2 mehr als 50 Gew.-%, besonders bevorzugt mehr als 55 Gew.-% und weniger als 80 Gew.-%, ganz besonders bevorzugt 58 bis 75 Gew.-% oder 60 bis 70 Gew.-%.

Die Gesamtheit der Spezies A3 ist vorzugsweise in einer Menge von 1 bis 7 Gew.-%, besonders bevorzugt 2 bis 6 Gew.-% und ganz besonders bevorzugt in einer Menge von 3 bis 5 Gew.-% bezogen auf das Gesamtgewicht der Stammlack-Komponente A enthalten.

Der oder die Vernetzungskatalysatoren A4 werden vorzugsweise in einer Menge von 0,15 bis 1,5 Gew.-%, besonders bevorzugt 0,2 bis 1,0 Gew.-%, insbesondere 0,25 bis 0,8 Gew.-% bezogen auf das Gesamtgewicht der Stammlack-Komponente A eingesetzt.

Sind ein oder mehrere Bestandteile A5 in der erfindungsgemäßen Zweikomponenten-Beschichtungsmittelzusammensetzung enthalten, so beträgt deren Anteil an der Gewichtssumme der Bestandteile A1, A2 und A5, vorzugsweise weniger als 50 Gew.-%, besonders bevorzugt weniger als 45 Gew.-% und besonders bevorzugt weniger als 40 Gew.-%, jedoch vorzugsweise mehr als 10 Gew.-%, bevorzugt mehr als 20 Gew.-% und besonders bevorzugt mehr als 30 Gew.-%.

Sind eines oder mehrere Polyetherdiole A6 in der erfindungsgemäßen Zweikomponenten-Beschichtungsmittelzusammensetzung enthalten, so beträgt deren Gehalt vorzugsweise 1 bis 10 Gew.-%, besonders bevorzugt 2 bis 8 Gew.-%, ganz besonders bevorzugt 3 bis 7 Gew.-% oder 4 bis 6 Gew.-% bezogen auf das Gesamtgewicht der Stammlack-Komponente A.

Sind eines oder mehrere polyethermodifizierte Alkylpolysiloxane A7 in der erfindungsgemäßen Zweikomponenten-Beschichtungsmittelzusammensetzung enthalten, so beträgt deren Gehalt vorzugsweise 0,5 bis 5 Gew.-%, besonders bevorzugt 1 bis 4 Gew.-%, ganz besonders bevorzugt 1 bis 3 Gew.-% oder 2 bis 3 Gew.-% bezogen auf das Gesamtgewicht der Stammlack-Komponente A.

Der Gehalt der erfindungsgemäßen Zweikomponenten-Beschichtungsmittelzusammensetzung an Pigmenten A8 und/oder Füllstoffen A8 kann in weiten Bereichen variieren. Vorzugsweise beträgt der Gesamtgehalt an Pigmenten und/oder Füllstoffen 0,1 bis 20 Gew.-%, besonders bevorzugt 0,3 bis 10 Gew.-% und ganz besonders bevorzugt 0,5 bis 5 Gew.-% bezogen auf das Gesamtgewicht der Stammlack-Komponente A je nach Deckkraft der Pigmente oder gewünschtem Füllstoffgrad.

Der Gehalt der erfindungsgemäßen Zweikomponenten-Beschichtungsmittelzusammensetzung an Additiven A9 kann ebenfalls in weiten Bereichen variieren. Sind Verlaufmittel in den erfindungsgemäßen Zweikomponenten-Beschichtungsmittelzusammensetzungen enthalten, so beträgt deren Gehalt bezogen auf das Gesamtgewicht der Stammlack-Komponente A vorzugsweise 0,1 bis 2 Gew.-%, besonders bevorzugt 0,2 bis 1,5 Gew.-% und besonders bevorzugt 0,3 bis 1 Gew.-%. Gleiche Mengenbereiche gelten vorzugsweise auch für die Rheologiehilfmittel. Der Gehalt an Netz- und Dispergiermitteln variiert üblicherweise in breiteren Bereichen insbesondere in Abhängigkeit des Pigment- und/oder Füllstoffgehalts und der Art der Pigmente und/oder Füllstoffe. Üblicherweise beträgt der Gehalt and Netz- und Dispergiermitteln bezogen auf das Gesamtgewicht der Stammlack-Komponente A vorzugsweise 0,1 bis 5 Gew.-%, besonders bevorzugt 0,2 bis 3 Gew.-%. Der Gesamtgehalt an Additiven A9 bezogen auf das Gesamtgewicht der Stammlack-Komponenten beträgt vorzugsweise 0 bis 8 Gew.-%, besonders bevorzugt 0,1 bis 5 Gew.-% und ganz besonders bevorzugt 0,5 bis 4 Gew.-%.

Die Härter-Komponente B enthält vorzugsweise mindestens 80 Gew.-%, besonders bevorzugt mindestens 90 Gew.-% und ganz besonders bevorzugt mindestens 95 Gew.-%, besser noch 100 Gew.-% an Polyisocyanaten B1. Es ist jedoch auch möglich, dass die Härter-Komponente weitere Di- oder Polyisocyanate B3 enthält, die nicht unter die Definition der Polyisocyanate B1 fallen, insbesondere solche die eine NCO-Funktionaliät aufweisen, die kleiner 2,4 oder größer 5 ist.

Die optionalen Additive A10 und B2 können bezogen auf das Gesamtgewicht der erfindungsgemäßen Zweikomponenten-Beschichtungsmittelzusammensetzung in einer Gesamtmenge von 0 bis zu maximal 8 Gew.-%, vorzugsweise maximal 5 Gew.-%, wie beispielsweise 0,5 bis 8 Gew.-% oder 1 bis 5 Gew.-% enthalten sein.

### Verfahren zur Beschichtung faserverstärkter Kunststoffe

Weiterer Gegenstand der vorliegenden Erfindung ist ein Verfahren zur Beschichtung faserverstärkter Kunststoffe beziehungsweise von Bauteilen daraus. Unter einem Bauteil wird hierin wie üblich ein Einzelteil verstanden, das mit anderen Bauteilen verbunden eine Baugruppe bildet. Handelt es sich beispielsweise beim Bauteil um das Teil einer Karosserie, so kann dieses mit anderen Karosseriebauteilen zu einer Karosserie zusammengefügt werden. Das erfindungsgemäße Verfahren zur Beschichtung von faserverstärkten Kunststoffen wird beispielhaft anhand der Beschichtung von Bauteilen aus faserverstärkten Kunststoffen beschrieben. Allgemein betrifft die Erfindung jedoch unabhängig vom Zweck des faserverstärkten Kunststoffs als Bauteil dienen zu können, generell die Beschichtung faserverstärkter Kunststoffe und ist somit nicht auf Bauteile im obigen Sinne beschränkt. Ist daher im Folgenden von der Beschichtung von Bauteilen aus einem faserverstärkten Kunststoff die Rede, so umfasst dies allgemein auch die Beschichtung faserverstärkter Kunststoffe ohne "Bauteilfunktion".

Beim erfindungsgemäßen Verfahren wird vorzugsweise ein Bauteil aus einem faserverstärkten Kunststoff in ein Formwerkzeug eingelegt. Im erfindungsgemäßen Verfahren bedarf es keiner Beschichtung des Formwerkzeugs mit einem Trennmittel oder Entformungshilfsmittel. Das Formwerkzeug wird bis auf einen Spalt zwischen dem Bauteil aus einem faserverstärktem Kunststoff und Formwerkzeug geschlossen, so dass ein Hohlraum zwischen Formwerkzeug und dem Bauteil aus einem faserverstärkten Kunststoff entsteht. Anschließend wird der Hohlraum mit dem erfindungsgemäßen Beschichtungsmittel geflutet und das erfindungsgemäße Beschichtungsmittel gehärtet. Die Breite des Spalts wird dabei so bemessen, dass die Schichtdicke des gehärteten Beschichtungsmittels vorzugsweise 100 bis 250 µm, besonders bevorzugt 125 bis 225 µm und ganz besonders bevorzugt 150 bis 200 µm beträgt. Nach der Härtung wird das beschichtete Bauteil aus einem faserverstärkten Kunststoff der Form entnommen, das heißt entformt. Das beschichtete Bauteil aus dem faserverstärkten Kunststoff kann ohne Schleifvorgang, gegebenenfalls nach einer einfachen Reinigung, direkt mit weiteren Beschichtungsmitteln wie beispielsweise einem oder mehreren Basislacklacken und einem oder mehreren Klarlacken unter Ausbildung einer oder mehrerer Basislackschichten beziehungsweise einer oder mehrerer Klarlackschichten beschichtet werden. Vorzugsweise wird auf den erfindungsgemäß beschichteten faserverstärkten Kunststoff keine Füllerschicht aufgebracht, sondern direkt eine Basislackschicht.

Als Basislacke und Klarlacke können prinzipiell alle konventionell in der Serienlackierung oder Reparaturlackierung eingesetzten Basislacke beziehungsweise Klarlacke verwendet werden. Derartige Basislacke und Klarlacke sind beispielsweise von der BASF Coatings GmbH erhältlich, wobei sich als Klarlacke insbesondere Klarlacke der EverGloss-Produktlinie besonders bewährt haben.

Die Beschichtung mit der erfindungsgemäßen Zweikomponenten-Beschichtungsmittelzusammensetzung wird vorzugsweise im von der Firma KraussMaffei Group GmbH etablierten Surface-Resin-Transfer-Molding-Verfahren erhalten, welches als eine Ausführungsform des obigen Verfahrens angesehen werden kann. Eine Beschreibung des Verfahrens kann beispielsweise Renkl, Schmidhuber & Fries in: Kunststoffe 3/2014, Seiten 86-89 entnommen werden. Die hierfür einsetzbaren Maschinen beziehungsweise Anlagen sind ebenfalls von der Firma KraussMaffei Group GmbH erhältlich (beispielsweise unter der Bezeichnung Minidos).

Typischerweise werden die Stammlack-Komponente A und die Härter-Komponente B der erfindungsgemäßen Zweikomponenten-Beschichtungsmittelzusammensetzung über getrennte Zuführungen dem Mischkopf der Anlage zugeführt. Vorzugsweise werden die Stammlack-Komponente A und Härter-Komponente B vorerwärmt auf Temperaturen zwischen 40 und 80 °C, besonders bevorzugt 50 bis 75 °C, wie beispielsweise 55 bis 70 °C, zugeführt. Die Zuführung erfolgt vorzugsweise unter Druck im Bereich von 160 bis 200 bar, besonders bevorzugt 170 bis 190 bar. Die Reaktionsdauer variiert in der Regel im Bereich von 1 bis 6 min, typischerweise 2 bis 4 min, bei einer Temperatur des Formwerkzeugs im Bereich von vorzugsweise 100 bis 140 °C, besonders bevorzugt 110 bis 130 °C.

Als Bauteile aus den faserverstärkten Kunststoffen werden im erfindungsgemäßen Verfahren vorzugsweise vorgeformte faserverstärkte Kunststoffe, besonders bevorzugt Faser-Kunststoff-Verbunde gewählt aus der Gruppe bestehend aus kohlenstofffaserverstärkten Kunststoffen (CFK), glasfaserverstärkten Kunststoffen (GFK) und aramidfaserverstärkten Kunststoffen (AFK) eingesetzt. Die Fasern liegen vorzugsweise in Form von Faserverbünden, insbesondere in Form von Geweben, Gelegen, Gestricken, Bändern, Vliesen und/oder Matten vor.

Die Kunststoffmatrix, in welcher die Fasern eingebettet sind, ist vorzugsweise gewählt aus der Gruppe der Epoxidharze und Polyurethane, besonders bevorzugt Epoxidharze.

Besonders bevorzugte faserverstärkte Kunststoffe beziehungsweise Bauteile daraus enthalten Kohlenstofffasern in einer Epoxidharz-Matrix.

Typische und bevorzugte Bauteile aus faserverstärkten Kunststoffen sind Karosserieteile von Kraftfahrzeugen. Die Erfindung ist jedoch keineswegs auf die Beschichtung von Karosserieteilen von Kraftfahrzeugen beschränkt. Vielmehr können alle faserverstärkten Kunststoffe beziehungsweise Bauteile daraus zur Beschichtung im erfindungsgemäßen Verfahren verwendet werden, insbesondere wenn diese für Anwendungsbereiche vorgesehen sind, in welchen sehr hochwertige Lackierungen, vor allem Class-A-Oberflächen gefordert sind.

### Verfahren zur Herstellung beschichteter faserverstärkter Kunststoffe

Die Herstellung und Vorformung der erfindungsgemäß zu beschichtenden faserverstärkten Kunststoffe beziehungsweise der Bauteile daraus kann vorzugsweise im gleichen Formwerkzeug erfolgen, in welchem die anschließende erfindungsgemäße Beschichtung des Bauteil aus dem faserverstärkten Kunststoffs mit der erfindungsgemäßen Zweikomponenten-Beschichtungsmittelzusammensetzung erfolgt. Beim sogenannten Compression-RTM (Compression Resin Transfer Molding; Kompressions-Harz-Transfer-Formgebungs-Verfahren) wird ein Vorformling aus einer oder mehreren Lagen der oben genannten Fasern oder Faserverbünde der oben genannten Fasern in das Formwerkzeug eingelegt, der Formenträger geschlossen und der Hohlraum evakuiert. Anschließend wird der die Fasern umgebende die Matrix bildende flüssige Kunststoff injiziert, wobei das Formwerkzeug auf ein vorbestimmtes Spaltmaß geöffnet ist. Anschließend wird das Formwerkzeug geschlossen, wobei der flüssige Kunststoff durch den Vorformling gepresst wird und dabei die Fasern beziehungsweise Faserverbünde benetzt. Anschließend erfolgt die Härtung des flüssigen Kunststoffs, wobei das Bauteil aus faserverstärktem Kunststoff gebildet wird. Die Werkzeughälften können dann nach abgeschlossener Härtung wieder einen Spalt geöffnet werden und das im Werkzeug verbliebene Bauteil aus dem faserverstärkten Kunststoff kann wie oben beschrieben direkt mit dem erfindungsgemäßen Zweikomponenten-Beschichtungsmittel durch Fluten des Spalts beschichtet werden. Da das Bauteil aus dem faserverstärkten Kunststoff im Formwerkzeug selbst hergestellt wird, ist es möglich auf diese Weise auf das Einlegen des Bauteils aus dem faserverstärkten Kunststoff vor der Beschichtung zu verzichten, da sich das Bauteil bereits im Formwerkzeug befindet. Die Herstellung derartiger Bauteile aus faserverstärkten Kunststoffen ist dem Durchschnittsfachmann bekannt, weshalb hier auf eine weitergehende Beschreibung verzichtet wird. Weiterer Gegenstand der vorliegenden Erfindung ist daher ein Verfahren zur Herstellung eines beschichteten Bauteils aus einem faserverstärkten Kunststoff.

Bevorzugter Gegenstand der vorliegenden Erfindung ist daher auch ein zweistufiges Verfahren zur Herstellung beschichteter Bauteile aus faserverstärkten Kunststoffen, vorzugsweise aus vorgeformten faserverstärkten Kunststoffen, umfassend als erste Stufe die Herstellung eines faserverstärkten Kunststoffs beziehungsweise eines Bauteils daraus mittels eines Kompressions-Harz-Transfer-Formgebungs-Verfahrens (Compression Resin Transfer Molding-Verfahren) und als zweite Stufe die Beschichtung des in der ersten Stufe erhaltenen faserverstärkten Kunststoffs beziehungsweise Bauteils daraus mittels eines Oberflächen-Harz-Transfer-Formgebungs-Verfahrens (Surface-Resin-Transfer-Molding-Verfahren), wobei die erfindungsgemäße Zweikomponenten-Beschichtungsmittelzusammensetzung zur Beschichtung des faserverstärkten Kunststoffs beziehungsweise Bauteils in der zweiten Stufe eingesetzt wird.

Bevorzugt wird die zweite Verfahrensstufe in direktem Anschluss an die erste Verfahrensstufe durchgeführt, ohne dass der in der ersten Stufe erhaltene faserverstärkte Kunststoff beziehungsweise das Bauteil daraus dem Formwerkzeug entnommen wird. Hierbei bedarf es somit - wie beim reinen Oberflächen-Harz-Transfer-Formgebungs-Verfahren - ebenfalls keiner Beschichtung des Formwerkzeugs mit sogenannten Entformungsmitteln, um das beschichtete faserverstärkte Bauteil beschädigungsfrei zu entformen.

### Verwendung der erfindungsgemäßen Beschichtungsmittel

Weiterer Gegenstand der vorliegenden Erfindung ist die Verwendung der erfindungsgemäßen Zweikomponenten-Beschichtungsmittelzusammensetzungen zur Beschichtung faserverstärkter Kunststoffe beziehungsweise der Bauteile daraus, vorzugsweise im Oberflächen-Harz-Transfer-Formgebungs-Verfahren.

Besonders bevorzugt ist die Verwendung der erfindungsgemäßen Zweikomponenten-Beschichtungsmittelzusammensetzungen als Beschichtungsmittel in einem zweistufigen Verfahren umfassend als erste Stufe die Herstellung eines faserverstärkten Kunststoffs beziehungsweise eines Bauteils daraus mittels eines Kompressions-Harz-Transfer-Formgebungs-Verfahrens und als zweite Stufe die Beschichtung des in der ersten Stufe erhaltenen faserverstärkten Kunststoffs beziehungsweise Bauteils daraus mittels eines Oberflächen-Harz-Transfer-Formgebungs-Verfahrens; wobei die erfindungsgemäße Zweikomponenten-Beschichtungsmittelzusammensetzung zur Beschichtung des faserverstärkten Kunststoffs beziehungsweise Bauteils daraus in der zweiten Stufe eingesetzt wird.

Bevorzugt erfolgt die zweite Verfahrensstufe in direktem Anschluss an die erste Verfahrensstufe, ohne dass der in der ersten Stufe erhaltene faserverstärkte Kunststoff oder das Bauteil daraus dem Formwerkzeug entnommen wird. Dementsprechend bedarf es vor Durchführung der zweiten Stufe auch keiner Beschichtung des Formwerkzeugs mit sogenannten Entformungsmitteln.

Im Folgenden wird die Erfindung durch Beispiele verdeutlicht.

### BEISPIELE

### 2K-Beschichtungsmittelzusammensetzungen: Beispiele 1 bis 4

Alle Angaben in Tabelle 1 sind Angaben in Gewichtsteilen. Die Bestandteile in Stammlack-Komponente A und Härter-Komponente B addieren sich jeweils zu 100 Gewichtsteilen. Vor der Verwendung wurden Stammlack-Komponente A und Härter-Komponente B im angegebenen Gewichtsverhältnis miteinander homogen vermischt. Alle eingesetzten Komponenten sind - soweit nicht anders angegeben - lösemittelfrei (100 % Festkörper).

Bei der Herstellung der Stammlack-Komponente A der Beispiele 1 bis 3 wurden die Bestandteile A1 und A2 vorgelegt und die weiteren Bestandteile A3, A4, A6 und A7 unter Rühren zugemischt (Mischungsdauer ca. 30 min bei einer maximalen Temperatur von 60 °C). Anschließend wurde der Stammlack filtriert und abgefüllt.

Bei der Herstellung der Stammlack-Komponente A des pigmenthaltigen Beispiels 4 wurde zunächst ein Mahlgut aus den Bestandteilen A5, A8, A9a und A9b herstellt, wobei A5 vorgelegt wurde und die Bestandteile A8, A9a und A9b unter Rühren zugemischt wurden (Mischungsdauer: 10 min, bei einer Maximaltemperatur von 60 °C). Anschließend wurde in einer Perlmühle (Verhältnis von Mahlgut:Perlen = 1:1,5) 30 min bei 2000 U/min und Einhaltung einer Maximaltemperatur von 60 °C gemahlen (Feinheit nach Hegmann < 5 µm). Zur Auflackung des Mahlgutes wurden die weiteren Bestandteile unter Rühren zugegeben und 10 min bei einer Maximaltemperatur vermischt. Anschließend wurde der Stammlack filtriert und abgefüllt.

Stammlack-Komponente A und Härter-Komponente B wurden erst kurz vor der Applikation im oben angegebenen Gewichtsverhältnis wie unten beschrieben homogen im Mischkopf der Anlage vermischt.

**Tabelle 1**

| | Beispiel 1 | Beispiel 2 | Beispiel 3 | Beispiel 4 |
|---|---|---|---|---|
| *Stammlack-Komponente A* | | | | |
| A1 | 57,58 | 57,58 | 57,88 | 35,55 |
| A2 | 29,67 | 29,67 | 29,82 | 18,30 |
| A3 | 5,00 | 5,00 | 5,00 | 5,00 |
| A4 | 0,75 | 0,75 | 0,30 | 0,75 |
| A5 | - | - | - | 30,00 |
| A6 | 5,00 | 5,00 | 5,00 | 5,00 |
| A7 | 2,00 | 2,00 | 2,00 | 2,00 |
| A8 | - | - | - | 1,50 |
| A9a | - | - | - | 1,00 |
| A9b | - | - | - | 0,50 |
| A9c | - | - | - | 0,40 |

| *Härter-Komponente B* | | | | |
|---|---|---|---|---|
| B1a | 100 | 90 | - | - |
| B1b | - | 10 | - | - |
| B1c | - | - | 100 | 100 |
| | | | | |
| *Gewichtsverhältnis von Stammlack A zu Härter B* | 100:141 | 100:157 | 100:171 | 100:130 |

| | | | | |
|---|---|---|---|---|
| A1: verzweigtes, kurzkettiges Polyester-Polyol mit einer Hydroxylzahl von ca. 400 mg KOH/g und einer Hydroxylgruppenfunktionalität zwischen 2,2 und 3 A2: Mischung aus 2,2,4-Trimethylpentan-1,3-diol und 2-Butyl-2-ethylpropandiol (53/47, w/w) A3: Mischung von Verbindungen der Formel R²-(C=O)ᵣ-O-(AO)ₛ-R³ aus (a) R² = Mischung gesättigter und ungesättigter Kohlenwasserstoffreste mit 12 bis 22 Kohlenstoffatomen, r = 0, AO = Mischung aus hauptsächlich Ethylenoxid- und wenig Propylenoxid-Einheiten und R³ = H (Mₙ ≈ 650 g/mol); und (b) R² = ungesättigter Kohlenwasserstoffrest mit 21 Kohlenstoffatomen, s = 0 und R³ = H A4: Dioctylzinndilaurat A5: sekundäres Diamin auf Basis eines Polyasparaginsäureesters mit einer Aminzahl von ca. 190 mg KOH/g A6: lineares Propylenglykol mit zwei endständigen Hydroxylgruppen und einer zahlenmittleren Molmasse (über Endgruppenbestimmung) von ca. 900 g/mol A7: polyethermodifiziertes Methylpolysiloxan A8: hochleitfähiges Rußpigment A9a: handelsübliches Netz- und Dispergiermittel (52 %ig in Methoxypropylacetat/Alkylbenzol, 1:1) auf Basis eines Copolymeren mit sauren Gruppen A9b: handelsübliches Verdickungsmittel auf Basis eines organisch modifizierten Bentonit-Tons A9c: handelsübliches Verlaufmittel auf Polyacrylatbasis B1a: Hexamethylendiisocyanat-Trimer des Iminooxadiazindion-Typs mit einem NCO-Gehalt von 23,5 Gew.-% B1b: Hexamethylendiisocyanat-Trimer des Isocyanurat-Typs mit einem NCO-Gehalt von 11 Gew.-% B1c: Hexamethylendiisocyanat-Allophanat/Trimer mit einem NCO-Gehalt von 19,5 Gew.-% | | | | |

### Herstellung eines beschichteten faserverstärkten Formteils im Surface-RTM-Verfahren

### (A) Herstellung des faserverstärkten Formteils (Anlage Minidos Epoxy-RTM / SFT MX 600; Mischkopf 5/8 ULKP-2KW)

Das Formwerkzeug wurde geöffnet, mit einem externen Trennmittel eingetrennt und ausgerieben, ein Carbonfaser-Vorformling (Chromarat) wurde eingelegt und das Formwerkzeug (Formträgertyp: CFT 380; Schließkraft: 250 kN) geschlossen. Das Epoxy-Matrix-Material (Harz: Baxxores ER2200 (temperiert auf 83 °C); Härter: Baxxodur EC2120 (temperiert auf 30 °C)) wurde unter Druck in das Formwerkzeug eingeführt (Harz: 132 bar, Düse in Düse: 0,9 mm; Härter 130 bar, Düse: 0,4 mm) und 5 min bei einer Formträger-Temperatur zwischen 115 und 130 °C gehärtet.

### (B) Beschichtung des faserverstärkten Formteils (Overmolding)

Nach der Herstellung des faserverstärkten Formteils gemäß Schritt (A) wurde das Werkzeug auf einen Spalt geöffnet, die Beschichtungsmittelzusammensetzung des Beispiels 1 wurde durch zwei Blenden unter Druck (Stammlack-Komponente A: Temperatur: 65 °C, 0,5 mm Blende, 172 bar; Härter-Komponente B: Temperatur: 60 °C; 0,6 mm Blende, 180 bar) eingebracht, um eine Beschichtung mit der Dicke von 200 µm (gehärtet) zu erhalten. Die Härtung der Beschichtungsmittelzusammensetzung erfolgte bei einer Formträger-Temperatur von ca. 115 bis 130 °C (150 s). Das beschichtete Formteil ließ sich problemlos und rückstandsfrei entformen.

Die erfindungsgemäß beschichteten Formteile lassen sich bei Bedarf ohne aufwändigen Reinigungsprozess oder gar Schleifprozesse nachbeschichten. Nach einem Transport oder längerer Lagerung empfiehlt es sich jedoch die beschichteten Formteile einfach unter Verwendung eines handelsüblichen Kunststoffreinigers abzuwischen. Weitere Vorbehandlungen sind nicht nötig.

Das erfindungsgemäß beschichtete faserverstärkte Formteil wurde mit einem handelsüblichen Standard-Reparatur-Basislack (BC JW62-7A52; 10 min bei 23 °C; anschließend 15 min bei 80°C) sowie einem Klarlack (CC JF71-0408; EverGloss; 10 min bei 23 °C; anschließend 45 min bei 80 °C) nachbeschichtet und gehärtet (beide Produkte sind bei der Firma BASF Coatings GmbH erhältlich).

Anschließend wurde ein Konstant-Klima-Test nach DIN EN ISO 6270-2 (2005-09) durchgeführt (240 h bei 40 °C) mit anschließender Auswertung in Bezug auf Blasenbildung (optisch), mittels des Gitterschnitt-Tests gemäß DIN EN ISO 2409 (2013-06; DE) (1 h und 24 h nach Belastungsende) und einer Dampfstrahlhaftungsprüfung nach DIN 55662 (2009-12) (1 h und 24 h nach Belastungsende). Es wurde keine Blasenbildung beobachtet. Auch im Gitterschnitt-Test und Dampfstrahl-Test wurde keine Enthaftung der Lackschichten festgestellt.

## Patentansprüche

1. Zweikomponenten-Beschichtungsmittelzusammensetzung, welche eine Stammlack-Komponente A und eine Härter-Komponente B umfasst, wobei die
Stammlack-Komponente A
i. eines oder mehrere Polyole A1 enthält, welche gewählt sind aus der Gruppe der Estergruppen enthaltenden Polyole, und welche eine Hydroxylzahl von 300 bis 500 mg KOH/g besitzen, und eine Hydroxylgruppenfunktionalität größer 2 aufweisen;
ii. ein oder mehrere ether- und estergruppenfreie aliphatische Polyole A2 der allgemeinen Formel (I)
R¹-(OH)ₚ (I)
worin R¹ für einen p-wertigen verzweigten, cyclischen oder linearen, gesättigten oder ungesättigten, aliphatischen Kohlenwasserstoffrest mit 5 bis 18 steht, und wobei der Rest R¹ optional ein oder mehrere tertiäre Aminogruppen enthält, und p = 2 bis 6 ist;
iii. eine oder mehrere Spezies A3 der allgemeinen Formel (II)
R²-(C=O)ᵣ-O-(AO)ₛ-R³ (II)
worin R² ein gesättigter oder ungesättigter, aliphatischer Kohlenwasserstoffrest mit 6 bis 30 Kohlenstoffatomen ist,
R³ für H, einen Rest PO(OH)₂ oder den gegebenenfalls teilweise phosphatierten Rest eines Mono- oder Disaccharids oder den gegebenenfalls teilweise phosphatierten Rest eines Alditols steht, AO für einen oder mehrere Alkylenoxid-Reste gewählt aus der Gruppe bestehend aus Ethylenoxid, Propylenoxid und Butylenoxid steht,
r = 0 oder 1 ist, und s = 0 bis 30 ist;
iv. einen oder mehrere Vernetzungskatalysatoren A4 gewählt aus der Gruppe der Organozinnverbindungen;
v. optional eines oder mehrere Polyamine A5 mit mindestens zwei sekundären Aminogruppen und einer Aminzahl von 120 bis 280 mg KOH/g;
vi. optional eines oder mehrere Polyetherdiole A6;
vii. optional eines oder mehrere polyethermodifizierte Alkylpolysiloxane A7;
viii. optional eines oder mehrere Pigmente A8 und/oder einen oder mehrere Füllstoffe A8; und
ix. optional eines oder mehrere Additive A9 gewählt aus der Gruppe bestehend aus Netz- und/oder Dispergiermitteln, Rheologiehilfsmitteln und Verlaufmitteln;
und wobei die
Härter-Komponente B
i. eines oder mehrere Polyisocyanate B1 enthält, welche im Mittel 2,4 bis 5 NCO-Gruppen aufweisen; und
die Zweikomponenten-Beschichtungsmittelzusammensetzung einen Festkörper von mindestens 96 Gew.-%, bezogen auf das Gesamtgewicht der Zweikomponenten-Beschichtungsmittelzusammensetzung gemäß ASTM D2369 (2015) besitzt, und
wobei das molare Verhältnis der NCO-Gruppen der Härter-Komponente B zu den aciden Wasserstoffatomen der Hydroxylgruppen, primären Aminogruppen und sekundären Aminogruppen der Stammlack-Komponente A von 1:1,15 bis 1:0,95 beträgt.

2. Zweikomponenten-Beschichtungsmittelzusammensetzung gemäß Anspruch 1, worin das oder die Polyole A1 verzweigte, Estergruppen enthaltende Polyole mit einer Hydroxylzahl von von 340 bis 460 mg KOH/g und einer Hydroxylgruppenfunktionalität von 3 bis 4 sind.

3. Zweikomponenten-Beschichtungsmittelzusammensetzung gemäß Anspruch 1 oder 2, worin das oder die ether- und estergruppenfreien aliphatischen Polyole A2 die allgemeine Formel (I) besitzen
R¹-(OH)ₚ (I)
worin R¹ für einen p-wertigen verzweigten, gesättigten, aliphatischen Kohlenwasserstoffrest mit 6 bis 16 Kohlenstoffatomen steht, wobei der Rest R¹ optional eine bis drei tertiäre Aminogruppen enthält, p = 2 bis 4 ist und sich zwischen zwei nächstbenachbarten Hydroxylgruppen maximal 2 bis 6 Kohlenstoff- und/oder Stickstoffatome befinden.

4. Zweikomponenten-Beschichtungsmittelzusammensetzung gemäß einem der Ansprüche 1 bis 3, worin das oder die ether- und estergruppenfreien aliphatischen Polyole A2 eine Hydroxylzahl im Bereich von 500 bis 1000 mg KOH/g, aufweisen.

5. Zweikomponenten-Beschichtungsmittelzusammensetzung gemäß einem der Ansprüche 1 bis 4, wobei in der oder den Spezies A3 der allgemeinen Formel (II) R² für einen gesättigten oder ungesättigten, aliphatischen Kohlenwasserstoffrest mit 10 bis 24 Kohlenstoffatomen steht,
R³ für H, einen Rest PO(OH)₂ oder den gegebenenfalls teilweise phosphatierten Rest eines Mono- oder Disaccharids oder den gegebenenfalls teilweise phosphatierten Rest eines Alditols, insbesondere des Sorbitols steht,
AO für einen oder mehrere Alkylenoxid-Reste gewählt aus der Gruppe bestehend aus Ethylenoxid und Propylenoxid steht, r = 0 oder 1 ist und
s = 0 oder 1 bis 25 ist.

6. Zweikomponenten-Beschichtungsmittelzusammensetzung gemäß einem der Ansprüche 1 bis 5, wobei in der oder den Spezies A3 der allgemeinen Formel (II) R² für einen gesättigten oder ungesättigten, aliphatischen Kohlenwasserstoffrest mit 10 bis 24 Kohlenstoffatomen steht,
R³ für H, einen Rest PO(OH)₂ oder den gegebenenfalls teilweise phosphatierten Rest eines Monosaccharids oder den gegebenenfalls teilweise phosphatierten Rest eines Alditols, insbesondere des Sorbitols steht,
AO für einen oder mehrere Alkylenoxid-Reste gewählt aus der Gruppe bestehend aus Ethylenoxid und Propylenoxid steht und der Ethylenoxidanteil an der Gesamtheit der Reste AO mindestens 70 mol-% beträgt, r = 0 oder 1 ist und s = 0 oder s = 6 bis 20 ist.

7. Zweikomponenten-Beschichtungsmittelzusammensetzung gemäß einem der Ansprüche 1 bis 6, worin der oder die Vernetzungskatalysatoren A4 gewählt werden aus der Gruppe der Dialkylzinndicarboxylate und Dialkylzinndimercaptide.

8. Zweikomponenten-Beschichtungsmittelzusammensetzung gemäß einem der Ansprüche 1 bis 7, worin die Polyamine A5 die allgemeine Formel (V) besitzen 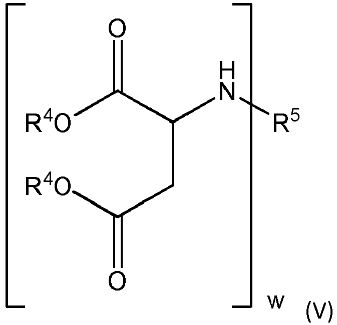 worin die Reste R⁴ unabhängig voneinander für verzweigte oder unverzweigte Alkylreste mit 1 bis 6 Kohlenstoffatomen stehen,
der Rest R⁵ für einen w-wertigen aliphatischen und/oder cycloaliphatischen Kohlenwasserstoffrest mit 6 bis 24 Kohlenstoffatomen steht und
w für 2 bis 4 steht.

9. Zweikomponenten-Beschichtungsmittelzusammensetzung gemäß einem der Ansprüche 1 bis 8, worin das oder die Polyetherdiole A6 die allgemeine Formel (VII) besitzen
HO-(AO)ₜ-H (VII)
worin die Reste AO unabhängig voneinander für Alkylenoxid-Reste gewählt aus der Gruppe bestehend aus Ethylenoxid, Propylenoxid und Butylenoxid stehen und t für 5 bis 30 steht.

10. Zweikomponenten-Beschichtungsmittelzusammensetzung gemäß einem der Ansprüche 1 bis 9, worin das oder die polyethermodifizierten Alkylpolysiloxane A7 polyethermodifizierte Methylpolysiloxane sind.

11. Zweikomponenten-Beschichtungsmittelzusammensetzung gemäß einem der Ansprüche 1 bis 10, worin das oder die aliphatischen Polyisocyanate B1 Trimere und/oder Tetramere von Diisocyanaten sind, und die Trimere und/oder Tetramere gewählt sind aus der Gruppe der Iminooxadiazindione, Isocyanurate, Allophanate und Biurete.

12. Zweikomponenten-Beschichtungsmittelzusammensetzung gemäß einem der Ansprüche 1 bis 11, worin
die Gewichtssumme der Bestandteile A1 bis A9 und B1 am Gesamtgewicht der erfindungsgemäßen Zweikomponenten-Beschichtungsmittelzusammensetzung beträgt vorzugsweise mindestens 90 Gew.-% beträgt;
die Gewichtssumme der Bestandteile A1, A2 und A5 bezogen auf das Gesamtgewicht der Stammlack-Komponente A von 75 bis 95 Gew.-% beträgt;
die Gewichtssumme der Bestandteile A1 bezogen auf die Gewichtssumme der Bestandteile A1 und A2 mehr als 50 Gew.-% beträgt;
die Gewichtssumme der Bestandteile A3 bezogen auf das Gesamtgewicht der Stammlack-Komponente A von 1 bis 7 Gew.-% beträgt;
die Gewichtssumme der Bestandteile A4 bezogen auf das Gesamtgewicht der Stammlack-Komponente A von 0,15 bis 1,5 Gew.-% beträgt;
die Gewichtssumme der Bestandteile A5 bezogen auf die Gewichtssumme der Bestandteile A1, A2 und A5, weniger als 50 Gew.-% bis 0 Gew.-% beträgt;
die Gewichtssumme der Bestandteile A6 bezogen auf das Gesamtgewicht der Stammlack-Komponente A. von 0 bis 10 Gew.-% beträgt;
die Gewichtssumme der Bestandteile A7 bezogen auf das Gesamtgewicht der Stammlack-Komponente A. von 0 bis 5 Gew.-% beträgt;
die Gewichtssumme der Bestandteile A8 bezogen auf das Gesamtgewicht der Stammlack-Komponente A beträgt von 0 bis 20 Gew.-% beträgt;
die Gewichtssumme der Bestandteile A9 bezogen auf das Gesamtgewicht der Stammlack-Komponente A von 0 bis 8 Gew.-% beträgt; und
die Gewichtssumme der Bestandteile B1 bezogen auf das Gesamtgewicht der Härter-Komponente B mindestens 90 Gew.-% beträgt.

13. Verfahren zur Beschichtung eines faserverstärkten Kunststoffs, wobei
(1) der faserverstärkte Kunststoff in ein Formwerkzeug eingelegt wird,
(2) das Formwerkzeug bis auf einen Spalt zwischen faserverstärktem Kunststoff und Formwerkzeug geschlossen wird, so dass ein Hohlraum zwischen Formwerkzeug und faserverstärktem Kunststoff entsteht,
(3) der Hohlraum mit einer Zweikomponenten-Beschichtungsmittelzusammensetzung gemäß einem der Ansprüche 1 bis 12 geflutet wird,
(4) die Beschichtungsmittelzusammensetzung gehärtet wird, und
(5) anschließend der beschichtete faserverstärkte Kunststoff entnommen wird.

14. Verfahren zur Herstellung eines beschichteten faserverstärkten Kunststoffs, wobei
(A) ein Vorformling aus Fasern oder Faserverbünden, die der Faserverstärkung des herzustellenden faserverstärkten Kunststoffs dienen, in das Formwerkzeug eingelegt wird,
(B) das Formwerkzeug bis auf einen Spalt geschlossen wird und der dabei gebildete Hohlraum evakuiert wird,
(C)anschließend ein flüssiger Kunststoff injiziert wird, der die Matrix des herzustellenden faserverstärkten Kunststoffs bildet,
(D)das Formwerkzeug geschlossen wird, wobei flüssige Kunststoff durch den Vorformling gepresst wird und dabei die Fasern beziehungsweise Faserverbünde benetzt,
(E) der flüssige Kunststoff gehärtet wird, wobei der faserverstärkte Kunststoff gebildet wird,
(F) das Formwerkzeug in direktem Anschluss an Schritt (E) bis auf einen Spalt zwischen faserverstärktem Kunststoff und Formwerkzeug geschlossen wird, so dass ein Hohlraum zwischen Formwerkzeug und faserverstärktem Kunststoff entsteht,
(G)der Hohlraum mit einer Zweikomponenten-Beschichtungsmittelzusammensetzung gemäß einem der Ansprüche 1 bis 12 geflutet wird,
(H)die Beschichtungsmittelzusammensetzung gehärtet wird, und
(I) anschließend der beschichtete faserverstärkte Kunststoff entnommen wird.

15. Verfahren nach einem der Ansprüche 13 oder 14, wobei der faserverstärkte Kunststoff in Form eines Bauteils vorliegt, vorzugsweise ein Bauteil gewählt aus Karosserieteilen eines Kraftfahrzeugs.

16. Verfahren nach einem der Ansprüche 13 bis 15, wobei der Spalt in Schritt (2) oder Schritt (F) eine Breite besitzt, die so bemessen ist, dass die Schichtdicke der gehärteten Beschichtungsmittelzusammensetzung im Bereich von 100 bis 250 µm liegt.

17. Verfahren nach einem der Ansprüche 13 bis 16, wobei
der beschichtete faserverstärkte Kunststoff, ohne einen Zwischenschleifvorgang mit einer oder mehreren Basislackschichten und einer oder mehreren Klarlackschichten beschichtet wird und
die Basislackschicht(en) und Klarlackschicht(en) getrennt oder gemeinsam gehärtet werden.

18. Verwendung der Zweikomponenten-Beschichtungsmittelzusammensetzung wie sie in den Ansprüchen 1 bis 12 definiert ist zur Beschichtung faserverstärkter Kunststoffe.

## Claims

1. A two-component coating material composition which comprises a paint base component A and a curing component B, wherein the
paint base component A
i. comprises one or more polyols A1 which are selected from the group of polyols containing ester groups and which possess a hydroxyl number of 300 to 500 mg KOH/g and have a hydroxyl group functionality of greater than 2;
ii. one or more aliphatic polyols A2 free from ether groups and ester groups, of the general formula (I)
R¹-(OH)ₚ (I)
in which R¹ is a p-valent branched, cyclic or linear, saturated or unsaturated, aliphatic hydrocarbon radical having 5 to 18, the radical R¹ optionally comprising one or more tertiary amino groups, and p is 2 to 6;
iii. one or more species A3 of the general formula (II)
R²-(C=O)ᵣ-O-(AO)ₛ-R³ (II)
in which R² is a saturated or unsaturated, aliphatic hydrocarbon radical having 6 to 30 carbon atoms, R³ is H, a radical PO(OH)₂, or the optionally partially phosphated radical of a mono- or disaccharide, or the optionally partially phosphated radical of an alditol, AO represents one or more alkylene oxide radicals selected from the group consisting of ethylene oxide, propylene oxide and butylene oxide,
r is 0 or 1, and s is 0 to 30;
iv. one or more crosslinking catalysts A4 selected from the group of organo tin compounds;
v. optionally one or more polyamines A5 having at least two secondary amino groups and an amine number of 120 to 280 mg KOH/g;
vi. optionally one or more polyether diols A6;
vii. optionally one or more polyether-modified alkylpolysiloxanes A7;
viii. optionally one or more pigments A8 and/or one or more fillers A8; and
ix. optionally one or more additives A9 selected from the group consisting of wetting and/or dispersing agents, rheological assistants, and flow control agents;
and wherein the
curing component B
i. comprises one or more polyisocyanates B1 which have on average 2.4 to 5 NCO groups; and
the two-component coating material composition possesses a solids content of at least 96 wt%, based on the total weight of the two-component coating material composition according to ASTM D2369 (2015), and
wherein the molar ratio of the NCO groups in the curing component B to the acidic hydrogen atoms of the hydroxyl groups, primary amino groups and secondary amino groups in the paint base component A is from 1:1.15 to 1:0.95.

2. The two-component coating material composition according to claim 1, in which the polyol or polyols A1 are branched polyols containing ester groups and having a hydroxyl number of from 340 to 460 mg KOH/g and a hydroxyl group functionality of 3 to 4.

3. The two-component coating material composition according to claim 1 or 2, in which the aliphatic polyol or polyols A2 free from ether groups and ester groups possess the general formula (I)
R¹-(OH)ₚ (I)
in which R¹ is a p-valent branched, saturated, aliphatic hydrocarbon radical having 6 to 16 carbon atoms, the radical R¹ optionally comprising one to three tertiary amino groups, p is 2 to 4, and not more than 2 to 6 carbon and/or nitrogen atoms are located between two immediately adjacent hydroxyl groups.

4. The two-component coating material composition according to any of claims 1 to 3, in which the aliphatic polyol or polyols A2 free from ether groups and ester groups have a hydroxyl number in the range from 500 to 1000 mg KOH/g.

5. The two-component coating material composition according to any of claims 1 to 4, wherein, in the one or more species A3 of the general formula (II),
R² is a saturated or unsaturated, aliphatic hydrocarbon radical having 10 to 24 carbon atoms, R³ is H, a radical PO(OH)₂, or the optionally partially phosphated radical of a mono- or disaccharide, or the optionally partially phosphated radical of an alditol, more particularly of sorbitol,
AO represents one or more alkylene oxide radicals selected from the group consisting of ethylene oxide and propylene oxide, r is 0 or 1, and s is 0 or 1 to 25.

6. The two-component coating material composition according to any of claims 1 to 5, wherein, in the one or more species A3 of the general formula (II),
R² is a saturated or unsaturated, aliphatic hydrocarbon radical having 10 to 24 carbon atoms, R³ is H, a radical PO(OH)₂, or the optionally partially phosphated radical of a monosaccharide, or the optionally partially phosphated radical of an alditol, more particularly of sorbitol,
AO represents one or more alkylene oxide radicals selected from the group consisting of ethylene oxide and propylene oxide, and the ethylene oxide fraction in the entirety of the radicals AO is at least 70 mol%, r is 0 or 1, and s is 0 or s is 6 to 20.

7. The two-component coating material composition according to any of claims 1 to 6, in which the crosslinking catalyst or catalysts A4 are selected from the group of dialkyltin dicarboxylates and dialkyltin dimercaptides.

8. The two-component coating material composition according to any of claims 1 to 7, in which the polyamines A5 possess the general formula (V) 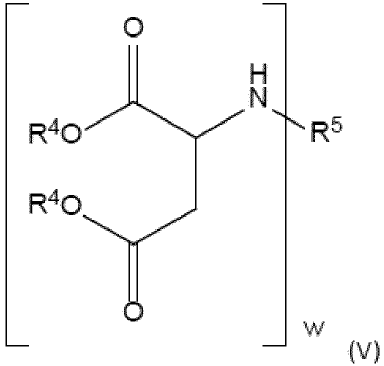 in which the radicals R⁴ independently of one another are branched or unbranched alkyl radicals having 1 to 6 carbon atoms,
the radical R⁵ is a w-valent aliphatic and/or cycloaliphatic hydrocarbon radical having 6 to 24 carbon atoms, and
w is 2 to 4.

9. The two-component coating material composition according to any of claims 1 to 8, in which the polyether diol or diols A6 possess the general formula (VII)
HO-(AO)ₜ-H (VII)
in which the radicals AO independently of one another are alkylene oxide radicals selected from the group consisting of ethylene oxide, propylene oxide, and butylene oxide, and t is 5 to 30.

10. The two-component coating material composition according to any of claims 1 to 9, in which the polyether-modified alkylpolysiloxane or alkylpolysiloxanes A7 are polyether-modified methylpolysiloxanes.

11. The two-component coating material composition according to any of claims 1 to 10, in which the aliphatic polyisocyanate or polyisocyanates B1 are trimers and/or tetramers of diisocyanates, and the trimers and/or tetramers are selected from the group of iminooxadiazinediones, isocyanurates, allophanates, and biurets.

12. The two-component coating material composition according to any of claims 1 to 11, in which the weight sum of constituents A1 to A9 and B1 within the total weight of the two-component coating material composition according to the invention is preferably at least 90 wt%;
the weight sum of constituents A1, A2, and A5, based on the total weight of the paint base component A, is from 75 to 95 wt%;
the weight sum of constituents A1, based on the weight sum of constituents A1 and A2, is more than 50 wt%;
the weight sum of constituents A3, based on the total weight of the paint base component A, is from 1 to 7 wt%;
the weight sum of constituents A4, based on the total weight of the paint base component A, is from 0.15 to 1.5 wt%;
the weight sum of constituents A5, based on the weight sum of constituents A1, A2, and A5, is less than 50 wt% to 0 wt%;
the weight sum of constituents A6, based on the total weight of the paint base component A, is from 0 to 10 wt%;
the weight sum of constituents A7, based on the total weight of the paint base component A, is from 0 to 5 wt%;
the weight sum of constituents A8, based on the total weight of the paint base component A, is from 0 to 20 wt%;
the weight sum of constituents A9, based on the total weight of the paint base component A, is from 0 to 8 wt%; and
the weight sum of constituents B1, based on the total weight of the curing component B, is at least 90 wt%.

13. A method for coating a fiber-reinforced plastic, wherein
(1) the fiber-reinforced plastic is placed into a mold,
(2) the mold is closed except for a gap between fiber-reinforced plastic and mold, so as to form a hollow between mold and fiber-reinforced plastic,
(3) the hollow is flooded with a two-component coating material composition according to any of claims 1 to 12,
(4) the coating material composition is cured, and
(5) subsequently the coated fiber-reinforced plastic is removed.

14. A method for producing a coated fiber-reinforced plastic, wherein
(A) a preform of fibers or fiber assemblies which serve for fiber reinforcement of the fiber-reinforced plastic to be produced is placed into the mold,
(B) the mold is closed except for a gap, and the hollow formed is evacuated,
(C) subsequently a liquid plastic is injected that forms the matrix of the fiber-reinforced plastic to be produced,
(D) the mold is closed, with liquid plastic being pressed through the preform and wetting the fibers or fiber assemblies,
(E) the liquid plastic is cured, to form the fiber-reinforced plastic,
(F) the mold, directly following step (E), is closed except for a gap between fiber-reinforced plastic and mold, so as to form a hollow between mold and fiber-reinforced plastic,
(G) the hollow is flooded with a two-component coating material composition according to any of claims 1 to 12,
(H) the coating material composition is cured, and
(I) subsequently the coated fiber-reinforced plastic is removed.

15. The method according to either of claims 13 and 14, wherein the fiber-reinforced plastic is in the form of a component, preferably a component selected from bodywork parts of a motor vehicle.

16. The method according to any of claims 13 to 15, wherein the width of the gap in step (2) or step (F) is such that the film thickness of the cured coating material composition is in the range from 100 to 250 µm.

17. The method according to any of claims 13 to 16, wherein
the coated fiber-reinforced plastic, without an intermediate sanding operation, is coated with one or more basecoat films and one or more clearcoat films, and
the basecoat film(s) and clearcoat film(s) are cured separately or jointly.

18. The use of the two-component coating material composition as defined in claims 1 to 12 for coating fiber-reinforced plastics.

## Revendications

1. Composition d'agents de revêtement à deux composants, qui comprend un composant vernis de base A et un composant durcisseur B, dans laquelle
le composant vernis de base A
i. contient un ou plusieurs polyols A1, qui sont choisis dans le groupe des polyols contenant des groupes ester, et qui possèdent un indice d'hydroxyle de 300 à 500 mg KOH/g et présentent une fonctionnalité de groupes hydroxyle supérieure à 2 ;
ii. un ou plusieurs polyols aliphatiques A2, exempts de groupes éther et ester, de Formule générale (I)
R¹-(OH)ₚ (I)
dans laquelle R¹ représente un radical hydrocarboné aliphatique, saturé ou insaturé, cyclique ou linéaire, ramifié, p-valent ayant 5 à 18, et le radical R¹ contenant éventuellement un ou plusieurs groupes amino tertiaires, et p = 2 à 6 ;
iii. une ou plusieurs espèces A3 de Formule générale (II)
R²-(C=O)ᵣ-O-(AO)ₛ-R³ (II)
dans laquelle R² représente un radical hydrocarboné aliphatique, saturé ou insaturé ayant 6 à 30 atomes de carbone,
R³ représente H, un radical PO(OH)₂ ou le radical éventuellement partiellement phosphaté d'un mono- ou d'un disaccharide, ou le radical éventuellement partiellement phosphaté d'un alditol,
AO représente un ou plusieurs radicaux oxyde d'alkylène, choisis dans le groupe consistant en l'oxyde d'éthylène, l'oxyde de propylène et l'oxyde de butylène,
r = 0 ou 1, et s = 0 à 30 ;
iv. un ou plusieurs catalyseurs de réticulation A4 choisis dans le groupe des composés de l'organoétain ;
v. éventuellement, une ou plusieurs polyamines A5 ayant au moins deux groupes amino secondaires et un indice d'amine de 120 à 280 mg KOH/g ;
vi. éventuellement un ou plusieurs polyétherdiols A6 ;
vii. éventuellement un ou plusieurs alkylpolysiloxanes A7 modifiés par un polyéther ;
viii.éventuellement un ou plusieurs pigments A8 et/ou une ou plusieurs charges A8 ; et
ix. éventuellement un ou plusieurs additifs A9 choisis dans le groupe consistant en les mouillants et/ou les dispersants, les auxiliaires de rhéologie et les diluants ;
et dans laquelle
le composant durcisseur B
i. contient un ou plusieurs polyisocyanates B1, qui présentent en moyenne 2, 4 à 5 groupes NCO ; et
la composition d'agents de revêtement à deux composants présentant une teneur en extrait sec d'au moins 96 % en poids, par rapport au poids total de la composition d'agents de revêtement à deux composants selon ASTM D2369 (2015), et
dans laquelle le rapport en moles des groupes NCO du composant durcisseur B aux atomes d'hydrogène acides des groupes hydroxyle, des groupes amino primaires et des groupes amino secondaires du composant vernis de base A étant de 1:1,15 à 1:0,95.

2. Composition d'agents de revêtement à deux composants selon la revendication 1,
dans laquelle le ou les polyols A1 sont des polyols contenant des groupes ester, ayant un indice d'hydroxyle de 340 à 460 mg KOH/g et une fonctionnalité de groupes hydroxyle de 3 à 4.

3. Composition d'agents de revêtement à deux composants selon la revendication 1 ou 2, dans laquelle le ou les polyols aliphatiques A2 exempts de groupes éther et ester ont la Formule générale (I)
R¹-(OH)ₚ (I)
dans laquelle R¹ représente un radical hydrocarboné aliphatique saturé ramifié, p-valent ayant 6 à 16 atomes de carbone, le radical R¹ contenant en option un ou plusieurs groupes amino tertiaires, p = 2 à 4 et, entre deux groupes hydroxyle immédiatement voisins, on trouve au maximum 2 à 6 atomes de carbone et/ou d'azote.

4. Composition d'agents de revêtement à deux composants selon l'une des revendications 1 à 3, dans laquelle les polyols aliphatiques A2 exempts de groupes éther et ester présentent un indice d'hydroxyle dans la plage de 500 à 1 000 mg KOH/g.

5. Composition d'agents de revêtement à deux composants selon l'une des revendications 1 à 4, dans laquelle, dans la ou les espèces A3 de Formule générale (II)
R² représente un radical hydrocarboné aliphatique saturé ou insaturé ayant 10 à 24 atomes de carbone,
R³ représente H, un radical PO(OH)₂ ou le radical éventuellement partiellement phosphaté d'un mono- ou d'un disaccharide et le radical éventuellement partiellement phosphaté d'un alditol, en particulier du sorbitol,
AO représente un ou plusieurs radicaux oxyde d'alkylène choisis dans le groupe consistant en l'oxyde d'éthylène et l'oxyde de propylène, r = 0 ou 1, et
s = 0 ou 1 à 25.

6. Composition d'agents de revêtement à deux composants selon l'une des revendications 1 à 5, dans laquelle, dans la ou les espèces A3 de Formule générale (II),
R² représente un radical hydrocarboné aliphatique, saturé ou insaturé ayant 10 à 24 atomes de carbone,
R³ représente H, un radical PO(OH)₂ ou le radical éventuellement partiellement phosphaté d'un monosaccharide ou le radical éventuellement partiellement phosphaté d'un alditol, en particulier du sorbitol,
AO représente un ou plusieurs radicaux oxyde d'alkylène choisis dans le groupe consistant en l'oxyde d'éthylène et l'oxyde de propylène, et la proportion de l'oxyde d'éthylène, par rapport au total des radicaux AO, étant d'au moins 70 % en moles, r = 0 ou 1, et s = 0 ou s = 6 à 20.

7. Composition d'agents de revêtement à deux composants selon l'une des revendications 1 à 6, dans laquelle le ou les catalyseurs de réticulation A4 sont choisis dans le groupe des dicarboxylates de dialkylétain et les dimercaptures de dialkylétain.

8. Composition d'agents de revêtement à deux composants selon l'une des revendications 1 à 7, dans laquelle les polyamines A5 ont la Formule générale (V) 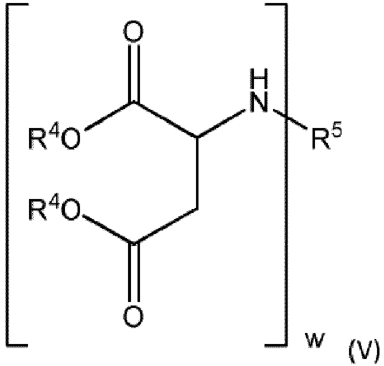 dans laquelle les radicaux R⁴ représentent indépendamment les uns des autres des radicaux alkyle ramifiés ou non ramifiés ayant 1 à 6 atomes de carbone, le radical R⁵ représente un radical hydrocarboné aliphatique et/ou cycloaliphatique w-valent ayant 6 à 24 atomes de carbone, et
w représente 2 à 4.

9. Composition d'agents de revêtement à deux composants selon l'une des revendications 1 à 8, dans laquelle le ou les polyéther diols A6 ont la Formule générale (VII)
HO-(AO)ₜ-H (VII)
dans laquelle les radicaux AO représentent, indépendamment les uns des autres, des radicaux oxyde d'alkylène choisis dans le groupe consistant en l'oxyde d'éthylène, l'oxyde de propylène et l'oxyde de butylène, et t représente 5 à 30.

10. Composition d'agents de revêtement à deux composants selon l'une des revendications 1 à 9, dans laquelle le ou les alkylpolysiloxanes A7 modifiés par un polyéther sont des méthylpolysiloxanes modifiés par un polyéther.

11. Composition d'agents de revêtement à deux composants selon l'une des revendications 1 à 10, dans laquelle le ou les polyisocyanates aliphatiques B1 sont des trimères et/ou des tétramères de diisocyanates, et les trimères et/ou les tétramères sont choisis dans le groupe des iminooxadiazindiones, des isocyanurates, des allophanates et des biurets.

12. Composition d'agents de revêtement à deux composants selon l'une des revendications 1 à 11, dans laquelle
le poids total des constituants A1 à A9 et B1, par rapport au poids total de la composition d'agents de revêtement à deux composants selon l'invention, est de préférence d'au moins 90 % en poids ;
le poids total des constituants A1, A2 et A5, par rapport au poids total du composant vernis de base A, est de 75 à 95 % en poids ;
le poids total des constituants A1, par rapport au poids total des constituants A1 et A2, est supérieur à 50 % en poids ;
le poids total des constituants A3, par rapport au poids total du composant vernis de base A, est de 1 à 7 % en poids ;
le poids total des constituants A4, par rapport au poids total du composant vernis de base A, est de 0,15 à 1,5 % en poids ;
le poids total des constituants A5, par rapport au poids total des constituants A1, A2 et A5, est inférieur à 50 % en poids et va jusqu'à 0 % en poids ; le poids total des constituants A6, par rapport au poids total du composant vernis de base A, est de 0 à 10 % en poids ;
le poids total des constituants A7, par rapport au poids total du composant vernis de base A, est de 0 à 5 % en poids ;
le poids total des constituants A8, par rapport au poids total du composant vernis de base A, est de 0 à 20 % en poids ;
le poids total des constituants A9, par rapport au poids total du composant vernis de base A, est de 0 à 8 % en poids ; et
le poids total des constituants B1, par rapport au poids total du composant durcisseur B, est d'au moins 90 % en poids.

13. Procédé de revêtement d'un plastique renforcé par des fibres, dans lequel
(1) le plastique renforcé par des fibres est placé dans un moule,
(2) le moule est fermé jusqu'à un interstice entre le plastique renforcé par des fibres et le moule, de façon qu'il se crée un espace vide entre le moule et le plastique renforcé par des fibres,
(3) on remplit l'espace vide d'une composition d'agents de revêtement à deux composants selon l'une des revendications 1 à 12,
(4) on durcit la composition d'agents de revêtement, et
(5) puis on prélève le plastique renforcé par des fibres, revêtu.

14. Procédé de fabrication d'un plastique renforcé par des fibres, revêtu, dans lequel
(A) on place dans le moule une préforme de fibres ou de composites de fibres, qui servent à renforcer par des fibres le plastique renforcé par des fibres à fabriquer,
(B) on ferme le moule jusqu'à un interstice, et on fait le vide dans l'espace vide qui se forme à cette occasion,
(C) puis on injecte un plastique liquide, qui forme la matrice du plastique renforcé par des fibres à fabriquer,
(D) on ferme le moule, le plastique liquide étant alors pressé à travers l'ébauche, ce qui provoque un mouillage des fibres ou des composites de fibres,
(E) on durcit le plastique liquide, ce qui forme le plastique renforcé par des fibres,
(F) on ferme le moule immédiatement après l'étape (E) jusqu'à un interstice entre le plastique renforcé par des fibres et le moule, de façon à créer un espace vide entre le moule et le plastique renforcé par des fibres,
(G) on remplit l'espace vide d'une composition d'agents de revêtement à deux composants selon l'une des revendications 1 à 12,
(H) on durcit la composition d'agents de revêtement, et
(I) puis on prélève le plastique renforcé par des fibres, revêtu.

15. Procédé selon l'une des revendications 13 ou 14, dans lequel le plastique renforcé par des fibres se présente sous forme d'un composant de construction, de préférence d'un composant de construction choisi parmi les éléments de carrosserie d'un véhicule à moteur.

16. Procédé selon l'une des revendications 13 à 15, dans lequel l'interstice de l'étape (2) ou de l'étape (F) présente une largeur qui est définie de telle sorte que l'épaisseur de couche de la composition d'agents de revêtement durcie soit dans la plage de 100 à 250 µm.

17. Procédé selon l'une des revendications 13 à 16, dans lequel le plastique renforcé par des fibres est revêtu sans une opération intermédiaire de polissage, avec une ou plusieurs couches de vernis de base et une ou plusieurs couches de vernis transparent, et
on sépare, ou on durcit conjointement, la ou les couches de vernis de base et la ou les couches de vernis transparent.

18. Utilisation de la composition d'agents de revêtement à deux composants telle que définie dans les revendications 1 à 12 pour revêtir des plastiques renforcés par des fibres.
